# EUROPÄISCHE PATENTSCHRIFT

(11) **EP 2 274 731 B1**
(45) Veröffentlichungstag und Bekanntmachung des Hinweises auf die Patenterteilung: **08.08.2018**
(21) Anmeldenummer: 09732901.5
(22) Anmeldetag: 23.03.2009
(51) Int. Cl.: G07F 7/10, G06K 19/077, G06C 9/00, G06K 19/02, H04L 9/32, G06F 21/32, G06F 21/44, H04L 29/06, H04W 12/06, G07D 7/01

(54) **DOKUMENT MIT EINEM SPEICHER UND EMPFÄNGER-GERÄT**
DOCUMENT WITH A MEMORY AND A RECEIVER DEVICE
DOCUMENT AVEC UNE MÉMOIRE ET UN APPAREIL DE RÉCEPTION

(30) Priorität: 14.04.2008 DE 102008001149
(43) Veröffentlichungstag der Anmeldung: 19.01.2011
(73) Patentinhaber: Bundesdruckerei GmbH, 10958 Berlin (DE)
(72) Erfinder: KÖLTZSCH, Gregor, 10317 Berlin (DE); PFLUGHOEFFT, Malte, 13347 Berlin (DE)
(74) Vertreter: Richardt Patentanwälte PartG mbB
(86) Internationale Anmeldenummer: PCT/EP2009/053382
(87) Internationale Veröffentlichungsnummer: WO 2009/127495

(56) Entgegenhaltungen:
- DE-A1-102004 046 847
- DE-A1-102005 030 628
- DE-A1-102006 009 128
- US-A1- 2006 016 870
- US-A1- 2006 091 223

## Beschreibung

Die Erfindung betrifft ein Dokument mit einem Speicher und mit einer Anzeige und ein Datenverarbeitungsverfahren. Aus dem Stand der Technik sind papierbasierte Wert- oder Sicherheitsdokumente bekannt, auf die zum Beispiel Stammdaten des Trägers des Dokuments aufgedruckt sind. Beispielsweise sind auf den deutschen Sozialversicherungsausweis die Rentenversicherungsnummer des Inhabers, dessen Namen und Geburtsdatum, sowie die ausstellende Landesversicherungsanstalt und das Ausstellungsdatum aufgedruckt.
Der Sozialversicherungsausweis ist für manche Arbeitnehmer mit einer Mitführpflicht verbunden, z.B. für Bauarbeiter, um bei Kontrollen prüfen zu können, ob der Arbeitnehmer versichert ist. Die Stammdaten sind in den Sozialversicherungsausweis eingedruckt, und es wird das Lichtbild des Arbeitnehmers von diesem selbst eingeklebt.
Diese technische Umsetzung des Dokuments und insbesondere des Meldeverfahrens ist anfällig gegen Missbrauch. Auch die Möglichkeiten zur Kontrolle der Versicherungsdaten sind nach dem Stand der Technik sehr eingeschränkt.
Nach Stand der Technik kann eine Aktualisierung der Versicherungsdaten nur durch Ausstellen eines neuen Sozialversicherungsausweis erfolgen. Ein Sozialversicherungsausweis nach dem Stand der Technik lässt sich nach Herstellung nicht mehr verändern. Die notwendigen Daten werden einmal aufgebracht und lassen sich nicht mehr entfernen. Das Dokument kann also nicht verändert und aktualisiert werden, auch nicht durch autorisierte Stellen.

Jede Veränderung oder Aktualisierung erfordert die Ausstellung eines neuen Dokuments. Deshalb werden auf dem Sozialversicherungsausweis lediglich Stammdaten angegeben, nicht jedoch Bewegungsdaten, wie z.B. die Daten des Arbeitsortes, Arbeitgebers o.ä.

Auch dem Nutzer eines bedruckten papierbasierten Dokuments entstehen durch den Stand der Technik Nachteile. Ein papierbasiertes Dokument mit sich zu führen, birgt zum einen die Gefahr der schnellen Abnutzung in sich. Nach dem Stand der Technik ist es nicht möglich, kurzfristige Angaben wie den Arbeitsort oder den Namen des Arbeitgebers gemeinsam mit langfristigen Stammdaten auf einem einzigen Dokument unterzubringen. Des Weiteren ist auch durch den Arbeitnehmer nicht prüfbar, ob der Arbeitgeber eine korrekte Meldung der Beschäftigung vorgenommen hat und der Arbeitnehmer so den vollen Versicherungsschutz genießt.

Auch unter Sicherheitsaspekten hat der Stand der Technik deutliche Nachteile. Papierbasierte Dokumente, insbesondere wenig gesicherte Dokumente im Niedrigkostenbereich, sind einfach zu fälschen.

Für Personalausweise ist es aus dem Stand der Technik bekannt, eine Aktualisierung mit Hilfe eines selbstklebenden Aufklebers vorzunehmen. Beispielsweise wird bei einem Wechsel des Wohnorts nicht ein neuer Personalausweis ausgestellt, sondern die neue Adresse mittels eines Aufklebers, mit dem die bisherige Adresse überdeckt wird, auf dem Personalausweis vermerkt. Nachteilig ist hierbei, dass ein solcher Aufkleber relativ leicht gefälscht werden kann. Ferner kann der Aufkleber von dem Personalausweis entfernt werden, und auf einen anderen Personalausweis aufgebracht werden.

Aus dem Stand der Technik ist ferner der so genannte elektronische Reisepass bekannt, wie er zum Beispiel in der DE 10 2005 025 806 A1 beschrieben ist. In einem solchen elektronischen Reisepass sind Datenobjekte gespeichert. Voraussetzung für das Auslesen der Datenobjekte mittels eines autorisierten Lesegeräts ist die zuvorige erfolgreiche Durchführung eines kryptographischen Protokolls. Eine Aktualisierung der Datenobjekte ist jedoch nicht vorgesehen, sodass bei einer Veränderung der Daten des Trägers des elektronischen Reisepasses ein neuer elektronischer Reisepass ausgestellt werden muss.

Aus der WO 99/38117 ist ferner eine Chipkarte mit einer flexiblen bistabilen Anzeige und einer integrierten Spannungsquelle bekannt. Die Chipkarte kann Informationen verschiedener Art empfangen und speichern.

Aus der DE 10 2004 046 845 A1 ist eine Dual-Interface Teilnehmerkarte bei Verkehrsmitteln, für die ein Fahrschein erforderlich ist, bekannt.

Aus der DE 10 2006 009 128 A1 ist ein Wert- oder Sicherheitsdokument mit einem Bereich zur optischen Aufmodulation einer Information auf eine einfallende Strahlung und einer hinter dem Bereich angeordneten strahlungssensitiven Matrix zur Erfassung der optischen Information bekannt. Außerdem ist ein entsprechender Schaltkreis zur Eingabe der Information beschrieben.

US 2006/0016870 A1 beschreibt ein biometrisches Sicherheitssystem mit einem Geruchs-Fingerabdruck-Sensor auf einer Smartcard.

DE 102005030628 A1 beschreibt ein Sicherheitsdokument mit integriertem Schaltkreis und einem integrierten Anzeigeelement. Der Schaltkreis dient zur Kommunikation mit einem externen Lese- und/oder Schreibgerat und mit mindestens einem in das Sicherheitsdokument integrierten Anzeigeelement zur visuellen Darstellung Personen- und/oder produktbezogener Daten, wobei das Anzeigeelement bidirektional mit dem integrierten Schaltkreis verbunden ist und derart zugleich vom integrierten Schaltkreis als Speicherfeld genutzt wird.

US 2006/0091223 A1 beschreibt elektronische Speicherkarten, z.B. Kreditkarten, mit einer ebenen Anzeigevorrichtung auf einer Seite der Karte.

DE 102004046847 A1 beschreibt ein System, Verfahren und einen entsprechenden tragbaren Datenträger zur Erzeugung einer digitalen Signatur. Für die zu signierenden Daten wird eine Signatur durch einen Benutzer mittels eines tragbaren Datenträgers erzeugt. Identifikationsdaten für die zu signierenden Daten werden in einem Server bestimmt, wobei die Identifikationsdaten aus den zu signierenden Daten ableitbar sind. Die Identifikationsdaten
werden mit Vergleichsdaten verglichen, dem Benutzer wird zumindest ein Teil der zu signierenden Daten dargestellt und es erfolgt eine Freigabe der Signaturerzeugung durch den Benutzer, bevor die digitale Signatur in dem tragbaren Datenträger erzeugt wird.

Dem gegenüber liegt der Erfindung die Aufgabe zu Grunde, ein verbessertes Dokument zu schaffen sowie ein Datenverarbeitungsverfahren, ein Empfänger-Gerät sowie ein Verfahren zur Überprüfung von in einem Dokument gespeicherten Daten.

Die der Erfindung zu Grunde liegenden Aufgaben werden jeweils mit den Merkmalen der unabhängigen Patentansprüche gelöst. Der Gegenstand der Erfindung wird in den unabhängigen Ansprüchen widergegeben. Ausführungsformen der Erfindung sind in den abhängigen Patentansprüchen angegeben.

Nach Ausführungsformen der Erfindung wird ein Dokument mit einer Schnittstelle zum Empfang von Daten und einer Signatur der Daten geschaffen. Das Dokument verfügt über Mittel zur Verifikation der Signatur, das heißt, zur Überprüfung der Gültigkeit der Signatur. Ferner verfügt das Dokument über einen Speicher und Mittel zur Speicherung der Daten und der Signatur in dem Speicher. Die Mittel zur Speicherung sind so ausgebildet, dass die Speicherung nur dann erfolgt, wenn die Signatur gültig ist. Die Schnittstelle des Dokuments ist zum Senden und/oder Empfang der Daten und der Signatur der Daten ausgebildet.

Bei den Daten kann es sich insbesondere um "Bewegungsdaten" handeln. Unter Bewegungsdaten werden hier im Gegensatz zu Stammdaten solche Daten verstanden, die sich relativ häufig ändern können. Bei einer Ausführungsform eines erfindungsgemäßen Dokuments als Sozialversicherungsausweis kann es sich bei den Bewegungsdaten beispielsweise um die wechselnden Einsatzorte eines Arbeitnehmers zum Beispiel auf verschiedenen Baustellen handeln. Die Daten können aber auch Stammdaten beinhalten, um auch diese aktualisieren zu können, ohne ein neues Dokument ausstellen zu müssen.

Unter einem "Dokument" wird hier insbesondere ein Wert- oder Sicherheitsdokument verstanden, wie zum Beispiel ein papier- und/oder kunststoff-basiertes Dokument, in das ein Chip integriert ist. Bei dem Dokument kann es sich insbesondere um eine Chipkarte handeln.

Nach der Erfindung hat das Dokument eine integrierte Anzeige und Mittel zur Ansteuerung der Anzeige. Die Mittel zur Ansteuerung der Anzeige sind so ausgebildet, dass zumindest ein Teil der Daten über die Anzeige ausgegeben oder wiedergegeben werden, wobei die Ausgabe oder die Wiedergabe nur dann erfolgt, wenn die Signatur gültig ist. Beispielsweise greifen die Mittel zur Ansteuerung der Anzeige auf den Speicher des Dokuments zu. Wenn die Signatur der empfangenen Daten ungültig ist, so werden diese Daten nicht in den Speicher des Dokuments gespeichert, sodass der Zugriff der Mittel zur Ansteuerung ins Leere geht, und dementsprechend die Daten nicht auf der Anzeige ausgegeben oder wiedergegeben werden. Die Erfindung ist besonders vorteilhaft, da durch das Dokument selbst eine Verifikation der Signatur der empfangenen Daten erfolgt. Nur wenn die Signatur der empfangenen Daten gültig ist, werden die Daten in dem Speicher des Dokuments gespeichert, sodass sie von dort beispielsweise zum Zwecke der Kontrolle von einem Kontroll-Gerät zu einem späteren Zeitpunkt ausgelesen werden können und/oder auf einer in das Dokument integrierten Anzeige angezeigt werden können. Zur Aktualisierung oder Ergänzung der Daten empfängt das Dokument mit seiner Schnittstelle solch aktualisierten oder ergänzten Daten, die ebenfalls signiert sind. Die aktualisierten oder ergänzten Daten werden wiederum nur dann in dem Speicher gespeichert, wenn deren Signatur gültig ist.

Ein solches erfindungsgemäßes Wert- oder Sicherheitsdokument hat also insbesondere den Vorteil, dass auch Bewegungsdaten hierin in vertrauenswürdiger und manipulationssicherer Art und Weise gespeichert werden können, und ferner eine effiziente Aktualisierung der Bewegungsdaten ermöglicht wird, und zwar ohne dass die Ausstellung eines neuen Dokuments erforderlich ist.

Insbesondere kann es sich bei der Anzeige des Dokuments um eine elektrophoretische oder elektrochrome Anzeige, eine bistabile Anzeige, eine Drehelementanzeige, insbesondere sog. elektronisches Papier ("E-Paper"), eine LED-Anzeige, insbesondere eine anorganische, organische oder Hybrid-LED-Anzeige, eine LCD-Anzeige in verschiedenen Ausführungsformen (zum Beispiel Twisted Nematic, Super Twisted Nematic, cholesterisch, nematisch), eine ferroelektrische Anzeige, eine Anzeige auf der Basis des Elektrowetting-Effekts, eine Anzeige auf Basis interferometrischer Modulatorelemente (IMOD), eine Hybridanzeige oder eine Anzeige auf Basis eines flexiblen Displays, wie sie beispielsweise von der Firma Citala (www.citala.com) kommerziell erhältlich ist (vergleiche US 2006/0250535 A1 und WO 2007/054944), handeln.

Insbesondere eine Photolumineszenz-Löschungsanzeige ermöglicht neben der Ausgabe der Daten in Form eines maschinenlesbaren optischen Signals und/oder der Anzeige der Daten auch die Erfassung eines optischen Signals. Photolumineszenz-Löschungsanzeigen basieren beispielsweise auf Fluoreszenz-Anzeigeelementen, die neben ihrer Anzeigefunktion auch zur Signalerfassung dienen. Entsprechende Anzeigevorrichtungen und Verfahren, insbesondere betreffend so genannte Field Quenching Photoluminescence Emission Devices (FQPEDs) sind beispielsweise bekannt aus DE 10042974 A1, DE 10313805 B4, EP 01385338 A1, EP 01391868 A1, EP 01443093 A1, EP 01478024 A1, EP 01478026 A2, US 06667729 B2, US 24017148 A1, US 25287899 A1, DE 10042974 A1, DE 10359881 A1 und EP 01662305 A2.

Nach einer Ausführungsform der Erfindung ist die Schnittstelle für eine Nahfeldkommunikation ausgebildet. Beispielsweise handelt es sich bei der Schnittstelle um eine Funkschnittstelle, insbesondere eine RFID-Schnittstelle oder eine BlueTooth Schnittstelle. Wenn die Anzeige des Dokuments zur Erfassung eines optischen Signals ausgebildet ist, kann die Schnittstelle durch die Anzeige realisiert sein. Eine separate Schnittstelle kann dann entfallen.

Die Mittel zur Verifikation der Signatur sind für eine sogenannte ZertifikatsKettenprüfung ausgebildet. Unter einer "Signatur" wird hier eine digitale Signatur verstanden, welche eine Prüfung der Authentizität der Daten ermöglicht. Insbesondere kann es sich um eine elektronische Signatur, wie zum Beispiel eine signaturgesetzkonforme elektronische Signatur, handeln.
Zusammen mit der Signatur kann über die Schnittstelle ein digitales Zertifikat empfangen werden, um die Überprüfung der Signatur in einer Public Key Infrastructure (PKI) zu ermöglichen. Beispielsweise kann es sich bei dem Zertifikat um ein standardisiertes Zertifikat, wie zum Beispiel nach dem X.509, RFC2440 oder ISO7816 Standard handeln. Vorzugsweise handelt es sich um ein sogenanntes Card Verifiable Certificate (CV-Zertifikat).
Nach Ausführungsformen der Erfindung beinhalten die Mittel zur Ansteuerung der Anzeige zur Ausgabe zumindest eines Teils der Daten einen Treiber für die Anzeige. Der Treiber kann Teil der Anzeige sein oder Teil des elektronischen Chips, der in den Dokumentenkörper des Dokuments integriert ist. Die Mittel zur Verifikation der Signatur und die Mittel zur Ansteuerung der Anzeige können ganz oder teilweise durch die integrierte Schaltung, insbesondere einen Mikroprozessor, realisiert sein, der entsprechende Programminstruktionen ausführen kann.
Nach Empfang der Daten und der Signatur der Daten wird zunächst geprüft, ob die Signatur gültig ist. Nur wenn dies der Fall ist, werden die Daten in dem Speicher des Dokuments gespeichert.

Nach der Erfindung handelt es sich bei dem Speicher um einen nicht-volatilen Speicher. Dies ist besonders vorteilhaft, da dann keine Spannungsversorgung in dem Dokument vorhanden sein muss, um die Daten permanent in dem Speicher zu speichern.

Aufgrund einer Leseanforderung eines Empfänger-Geräts, wie zum Beispiel eines Kontroll-Geräts, sendet das Dokument die Daten und deren Signatur. Das Empfänger-Gerät kann dann die Authentizität der Daten mittels der Signatur prüfen.

Ausführungsformen der vorliegenden Erfindung sind besonders vorteilhaft, da die Daten durch das Dokument angezeigt werden. Die Daten können insbesondere Bewegungsdaten beinhalten. Die Bewegungsdaten werden auf der Anzeige angezeigt, so dass der Träger des Dokuments diese ablesen kann. Dies ermöglicht auch eine Sichtprüfung des Dokuments. Besonders vorteilhaft ist hierbei, dass die über die Anzeige ausgegebenen Daten einen hohen Grad an Vertrauenswürdigkeit haben, da diese ja nur nach erfolgreicher Verifikation der Signatur angezeigt werden. Diese Sicherheit gegen Manipulationen wird dadurch weiter erhöht, dass die auf der Anzeige zumindest teilweise angezeigten Daten über die Schnittstelle zusammen mit deren Signatur von einem externen Empfänger-Gerät aus dem Dokument ausgelesen werden können. Das Empfänger-Gerät kann auf diese Art und Weise seinerseits nochmals prüfen, ob die angezeigten Daten authentisch sind. Allerdings ist auch dann eine Kontrolle des Dokuments mit einem hohen Maß an Sicherheit möglich, wenn gerade kein Empfänger-Gerät zur Verfügung steht, da ja die Daten nur nach vorheriger Verifikation der Signatur auf dem Dokument angezeigt werden.

Nach der Erfindung verfügt das Dokument über einen Energiespeicher, wie zum Beispiel eine Primärzelle, eine Sekundärzelle oder einen Speicherkondensator. Der Energiespeicher ermöglicht die Versorgung der Anzeige mit elektrischer Energie, so dass insbesondere eine emissive Anzeige verwendet werden kann.

Nach der Erfindung ist die Anzeige des Dokuments bistabil. Unter einer bistabilen Anzeige wird hier eine Anzeige verstanden, die auch ohne die Zuführung von elektrischer Energie in ihrem Anzeigezustand verharrt, wie dies zum Beispiel bei sogenanntem elektronischem Papier der Fall ist. Die Verwendung einer bistabilen Anzeige hat den Vorteil, dass für die permanente Ausgabe der Daten keine ständige Energiezufuhr nötig ist. Bei dieser Ausführungsform ist also ein in das Dokument integrierter Energiespeicher nicht unbedingt erforderlich. Eine bistabile Anzeige hat Anzeigeelemente, die jeweils zumindest zwei verschiedene stabile Zustände einnehmen können.

Nach der Erfindung hat das Dokument Mittel zum Einkoppeln von Energie zur Energieversorgung der Anzeige und der integrierten elektronischen Schaltung. Die Einkopplung der Energie kann beispielsweise über eine elektromagnetische oder kapazitiven Kopplung mit einem Sender-Gerät und/oder einem Empfänger-Gerät erfolgen.

Die Schnittstelle des Dokuments ist vorzugsweise kontaktlos ausgebildet. Insbesondere kann die Schnittstelle nach einem oder mehreren der folgenden Standards ausgebildet sein:
ISO 14443 ID-Cards - Proximity Cards (Identifikationskarte, Reisedokumente)
ISO 10536 ID-Cards - Close Coupling Cards
ISO 15693 ID-Cards - Vicinity Cards
ISO 18000-3 Mode A
ISO 18092 Near Field Communication
ISO 14443A

Beispielsweise wird anlässlich des Empfangs der Daten und deren Signatur von einem Sender-Gerät elektrische Energie in das Dokument eingekoppelt, so dass die integrierte elektronische Schaltung für die Dauer des Empfangs, der Verifikation der Signatur und gegebenenfalls der Speicherung und optional der Ansteuerung der Anzeige mit elektrischer Energie versorgt wird. Nachdem die integrierte elektronische Schaltung die Daten in dem Speicher gespeichert hat und/oder die Anzeige zur Ausgabe zumindest eines Teils der Daten angesteuert hat, ist zunächst keine weitere elektrische Energie erforderlich, wenn es sich bei dem Speicher um einen nicht-volatilen elektronischen Speicher handelt und wenn es sich um eine bistabile Anzeige handelt, weil die Anzeige in ihrem dann eingenommenen Anzeigezustand verharrt.

Zum Lesen der Daten und deren Signatur aus dem Dokument erfolgt die Energieversorgung des Dokuments von dem Empfänger-Gerät, welches beispielsweise über die Schnittstelle diese elektrische Energie für die Dauer des Lesevorgangs einkoppelt.

Nach einer Ausführungsform der Erfindung hat das Dokument einen elektronischen Speicher zur Speicherung von Stammdaten. Bei Ausführungsformen des Dokuments mit einer oder mehreren Anzeigen werden die Stammdaten auf derselben Anzeige wie die Bewegungsdaten oder einer anderen Anzeige des Dokuments ausgegeben. Alternativ oder zusätzlich trägt das Dokument einen Aufdruck mit zumindest einem Teil der Stammdaten.

Nach einer Ausführungsform der Erfindung hat das Dokument ein oder mehrere optische Sicherheitsmerkmale des Wert- oder Sicherheitsdrucks. Solche optischen Sicherheitsmerkmale können visuell durch einen Benutzer und/oder maschinell durch einen optischen Sensor geprüft werden. Zu den optischen Sicherheitsmerkmalen zählen beispielsweise:
- Guillochen: Guillochen werden mit Hilfe von so genanntem Liniendruck auf das Dokument aufgedruckt. Sie bestehen im Allgemeinen aus in verschiedenen Farben übereinander gedruckten Wellen- und Schleifenmustern;
- Mikro-Schrift: Hierbei handelt es sich um aufgedruckte Schriftzüge in kleinster Schrift. Mit bloßem Auge lässt sich die Mikro-Schrift kaum erkennen. Beispielsweise ist Mikro-Schrift auf den Euro-Banknoten als Bildelemente in die Motive eingearbeitet. Mit Hilfe einer Lupe kann die Mikro-Schrift gelesen werden;
- Metamere Systeme: Aufgrund metamerer Farbgleichheit können unterschiedliche spektrale Zusammensetzungen des Lichts bei Menschen den gleichen Farbeindruck hervorrufen;
- Aufdrucke mit Fluoreszenz, Phosphoreszenz und/oder Up-Conversion-Farben;
- Aufdrucke mit Infrarot-Farbe: Die Farbe wird nur unter Infrarot-Strahlung für Lesegeräte mit entsprechenden Sensoren sichtbar. Beispielsweise sind Euro-Banknoten mit diesem optischen Sicherheitsmerkmal ausgestattet;
- Barcodes, insbesondere ein- oder zweidimensionale Barcodes;
- Optisch variable Farben (OVI - Optical Variable Ink): Bei einer optisch variablen Farbe ändert sich der Farbeindruck je nach Betrachtungswinkel, da das Licht an den Pigmenten gebrochen, gestreut oder reflektiert wird;
- Hologramme und Kinegramme (transparent oder reflektierend);
- Wasserzeichen, insbesondere digitale Wasserzeichen, die eine maschinell auslesbare Information tragen;
- Passerdruck: Verschiedene Muster oder Symbole werden so über- oder aneinander gedruckt, dass sie zusammen ein bestimmtes Bild ergeben. Kleinste Abweichungen im Stand, d.h. so genannte Passerungenauigkeiten, können leicht mit bloßem Auge erkannt werden. Wenn sich die Teilbilder auf verschiedenen Seiten des Dokuments, wie zum Beispiel einer Banknote, befinden, bezeichnet man dieses optische Sicherheitsmerkmal als Durchsichtspasser;
- Durchsichtsfenster: Ein Fenster aus einer transparenten Kunststofffolie ist in dem Dokument eingearbeitet;
- Melierfasern: Dem Papier des Dokuments werden Fasern beigemischt, die unter UV-Licht in verschiedenen Farben leuchten;
- Sicherheitsfaden;
- Mikroperforation.

Das Vorhandensein eines oder mehrerer der Sicherheitsmerkmale erhöht die Sicherheit gegen Manipulationen weiter. Die Prüfung der Authentizität des Dokuments basierend auf einem Sicherheitsmerkmal ist insbesondere vorteilhaft, wenn kein Kontroll-Gerät zur Verfügung steht, also eine reine Sichtprüfung des Dokuments vorgenommen wird.

Nach einem Beispiel ist das Dokument so ausgebildet, dass das Senden der Daten und der Signatur der Daten an das Empfänger-Gerät auf optischem Wege über die Anzeige des Dokuments erfolgt. Beispielsweise wird die Anzeige so angesteuert, dass ein ein- oder zweidimensionaler Barcode ausgegeben wird, der die Daten und deren Signatur beinhaltet. Der Barcode wird dann von dem Empfänger-Gerät optisch erfasst und decodiert. Die Ausgabe der Daten und deren Signatur über die Anzeige kann so erfolgen, dass sie durch einen Benutzer nicht kognitiv und/ oder nicht visuell erfassbar ist. Hierzu kann die Anzeige zur Ausgabe eines modulierten optischen Signals angesteuert werden, wie es an sich aus der DE 10 2006 031 422 A1 bekannt ist.
Nach einer Ausführungsform der Erfindung erfolgt die Ausgabe der Daten durch Widergabe eines maschinenlesbaren Codes, insbesondere eines Barcodes, auf der Anzeige.
Nach einer Ausführungsform der Erfindung hat das Dokument Mittel zur Authentifizierung des Empfänger-Geräts. Die erfolgreiche Authentifizierung des Empfänger-Geräts gegenüber dem Dokument ist dabei eine notwendige Voraussetzung dafür, dass die Daten und deren Signatur von dem Dokument ausgegeben werden. Dies ist besonders vorteilhaft, um den Datenschutz zu gewährleisten. Die Authentifizierung des Empfänger-Geräts kann mittels eines kryptographischen Protokolls, basierend auf einem symmetrischen Schlüssel und/oder einem asymmetrischen Schlüsselpaar erfolgen. Insbesondere kann die Authentifizierung des Empfänger-Geräts durch eine sogenannte Basic Access Control (BAC) oder eine sogenannte Extended Access Control (EAC) implementiert sein, um ein von dem Träger des Dokuments nicht autorisiertes oder unbemerktes Auslesen der Daten zu unterbinden. BAC- und EAC-Verfahren sind beispielsweise von der internationalen Luftfahrtbehörde (ICAO) für maschinenlesbare Reisedokument (machine readable travel documents - MRTDs) standardisiert worden.

Nach einer Ausführungsform der Erfindung hat das Dokument Mittel zur Authentifizierung gegenüber dem Empfänger-Gerät. Auch die Authentifizierung des Dokuments gegenüber dem Empfänger-Gerät kann mittels eines kryptographischen Protokolls unter Verwendung eines symmetrischen Schlüssels und/oder eines asymmetrischen Schlüsselpaars erfolgen. Insbesondere kann ein dem Dokument zugeordnetes Zertifikat in dessen elektronischen Speicher gespeichert sein, mit dessen Hilfe das Empfänger-Gerät das Dokuments authentifizieren kann. Hierdurch wird die Vertrauenswürdigkeit des Dokuments und der von ihm angezeigten Daten weiter gesteigert.

Nach einer Ausführungsform der Erfindung beinhaltet das Dokument Mittel zur Authentifizierung des Trägers des Dokuments. Hierdurch soll sichergestellt werden, dass der Träger des Dokuments der rechtmäßige Besitzer des Dokuments ist. Die Authentifizierung des Trägers gegenüber dem Dokument kann so erfolgen, dass der Träger des Dokuments eine geheime Kennung unmittelbar in das Dokument oder in das Empfänger-Gerät eingeben muss, insbesondere dessen sogenannte Personal Identification Number (PIN).

Die Authentifizierung des Trägers des Dokuments kann auch mittels biometrischer Verfahren erfolgen. Beispielsweise sind hierzu in dem elektronischen Speicher des Dokuments biometrische Referenzdaten beispielsweise des Fingerabdrucks oder der Iris des rechtmäßigen Trägers des Dokuments gespeichert. Zur Authentifizierung werden die entsprechenden biometrischen Daten von dem Träger des Dokuments erfasst und mit den biometrischen Referenzdaten verglichen.

Die Erfassung der biometrischen Daten und der Vergleich mit den biometrischen Referenzdaten kann durch das Dokument selbst erfolgen, wenn dieses einen geeigneten Sensor zur Erfassung der biometrischen Daten, wie zum Beispiel einen Fingerabdrucksensor oder eine Miniatur-Kamera aufweist. Alternativ kann die Erfassung und der Vergleich mit den Referenzdaten durch das Empfänger-Gerät vorgenommen werden, indem dieses die biometrischen Referenzdaten nach vorheriger Authentifizierung aus dem elektronischen Speicher des Dokuments ausliest. Das Empfänger-Gerät hat einen Sensor zur Erfassung der entsprechenden biometrischen Daten, so dass das Empfänger-Gerät die Authentifizierung des Trägers vornehmen kann. Durch diese Authentifizierung des Trägers kann sich eine Kontrollinstanz dahingehend Sicherheit verschaffen, dass das Dokument dem rechtmäßigen Besitzer nicht entwendet worden ist.

Nach Ausführungsformen der Erfindung ist besonders vorteilhaft, dass nur noch ein einziges Dokument als Berechtigungsnachweis erforderlich ist, wobei das Dokument sowohl Stammdaten als auch Bewegungsdaten trägt. Hierzu können beispielsweise sowohl die Stammdaten des Trägers des Dokuments als auch die Bewegungsdaten auf einer einzigen oder verschiedenen Anzeigen des Dokuments angezeigt werden. Alternativ oder zusätzlich kann das Dokument einen Aufdruck mit den Stammdaten haben.

Nach einer Ausführungsform der Erfindung hat das Dokument eine vollflächige bistabile Anzeige, eine vollflächige OLED-Anzeige oder eine vollflächige Anzeige, die aus einer Kombination von OLED- und bistabilen Anzeigeelementen besteht.

In einem weiteren Aspekt betreffen Ausführungsformen der Erfindung ein Datenverarbeitungsverfahren zur Verarbeitung von Daten durch ein Dokument, mit folgenden Schritten: Empfang von Daten und einer Signatur der Daten über eine Schnittstelle des Dokuments; Prüfung der Gültigkeit der Signatur; falls die Signatur gültig ist, Speicherung der Daten und der Signatur in einem nicht-flüchtigen Speicher des Dokuments und Anzeige zumindest eines Teils der Daten durch Ansteuerung einer Anzeige des Dokuments.

In einem weiteren Aspekt betrifft die Anmeldung ein Empfänger-Gerät, insbesondere ein Kontroll-Gerät, zum Empfang von in einem Dokument gespeicherten Daten mit: Mitteln zur Authentifizierung des Empfänger-Geräts gegenüber dem Dokument, Mitteln zum Empfang der Daten und einer Signatur der Daten von dem Dokument, Mitteln zur Prüfung der Signatur der Daten, und Mitteln zur Erzeugung eines Bestätigungssignals, wenn die Signatur gültig ist.

Nach Beispielen beinhaltet das Empfänger-Gerät zudem Mittel zur Prüfung eines optischen Sicherheitsmerkmals des Dokuments.

Nach weiteren Beispielen beinhaltet das Empfänger-Gerät zudem eine Netzwerkschnittstelle zum Zugriff auf einen Server-Computer.

In einem weiteren Aspekt betrifft die Anmeldung ein Verfahren zur Überprüfung von in einem Dokument gespeicherten Daten durch ein Empfänger-Gerät mit folgenden Schritten: Empfang von Daten und einer Signatur der Daten von dem Dokument, Prüfung der Signatur der Daten, Erzeugung eines Bestätigungssignals, wenn die Signatur gültig ist.

Ausführungsformen der Erfindung ermöglichen ein effizientes und sicheres Verfahren zur Anmeldung, Ummeldung, Abmeldung und/oder Verifikation von beschäftigungsbezogenen Daten, insbesondere Bewegungsdaten, und Stammdaten sozialversicherungspflichtig Beschäftigter, mittels eines erfindungsgemäßen Sicherheits- oder Wertdokument für den Gebrauch im Bereich Sozialversicherung, wobei die Ausstellung eines neuen Dokuments vermieden werden kann, wenn sich Bewegungsdaten ändern.

Hierbei verfügt das Sicherheits- oder Wertdokument in einer möglichen Ausführungsform über einen integrierten Schaltkreis und in einer weiteren über mindestens ein Anzeigeelement, wobei das Anzeigeelement über den integrierten Schaltkreis gesteuert wird und zur Darstellung von Daten mit Bezug zur Nutzung des Sicherheits- oder Wertdokuments oder zum Dokumenteninhaber dient. Das Verfahren soll vor allem zur sicheren Identifikation von sozialversicherungspflichtig Beschäftigten mit wechselndem Arbeitsplatz dienen, wozu temporäre Daten, d.h. Bewegungsdaten, wie zum Beispiel Beschäftigungsort und -dauer, die Berechtigung des Dokumenteninhabers zur Inanspruchnahme von Leistungen öffentlicher Sozialversicherungseinrichtungen, u.a. Rentenversicherung, Arbeitslosenversicherung und zusätzliche Daten angezeigt werden können.

Des Weiteren ermöglichen Ausführungsformen der Erfindung die einfache Aktualisierung der Daten mit gleichzeitiger Meldung der sozialversicherungspflichtigen Beschäftigungsverhältnisse, so dass sowohl der Beschäftigte als auch ein Kontrolleur eine korrekte Anmeldung der Beschäftigung feststellen kann. Eine Besonderheit der Erfindung darin, dass Versicherungsnehmer mit häufig wechselndem Arbeitgeber und/oder Beschäftigungsort bzw. Versicherungsnehmer, die einer Mitführpflicht für das Dokument unterliegen andere Dokumente erhalten und im Verfahren anders behandelt werden können als Versicherungsnehmer, auf welche die genannten Kriterien nicht zutreffen. Beispielsweise erhalten die erstgenannten Personen eine Ausführungsform eines erfindungsgemäßen Dokuments mit integrierter Anzeige und die zweitgenannten Personen eine Ausführungsform ohne Anzeige.

Dabei verfügt das Sicherheits- oder Wertdokument bevorzugt über eine Schnittstelle zur kontaktlosen Kommunikation, bevorzugt eine Schnittstelle für Proximity-RFID oder Nahfeldkommunikation (near field communication, NFC), über die Energieversorgung, Anzeige und Aktualisierung des Anzeigeelements mit Hilfe eines stationären oder mobilen elektronischen Gerätes vorgenommen werden kann.

Ausführungsformen der Erfindung umfassen des Weiteren die Darstellung und Aktualisierung der Berechtigung sowie der mobilen Verifikation der auf dem Sicherheitsdokument angezeigten und gespeicherten Daten, einschließlich der Verifikation der biometrischen Daten des Dokumenteninhabers mit gegebenenfalls auf dem Dokument gespeicherten Referenzdaten und Darstellung der Ergebnisse der Verifikation auf dem Anzeigeelement des Dokuments.

Ausführungsformen der Erfindung ermöglichen es die Versicherungsdaten online vom Arbeitgeber an die Versicherung zu melden. Diese erstellt eine signierte Bestätigung, welche auf dem Dokument des Arbeitnehmers gespeichert werden kann. Diese aktuellen Daten können nach Bedarf auf der Anzeigevorrichtung in einer Ausführungsform des Sicherheitsdokumentes sichtbar gemacht werden. Dies wird erreicht durch die Integration einer variablen Anzeigevorrichtung in papier- oder kunststoffbasierte Sicherheits- oder Wertdokumente (im folgenden "Dokument"). Die Anzeigevorrichtung kann beispielsweise gemäß DE 10 2005 030 627, DE 10 2005 039 524, DE 10 2005 030 626, DE 10 2005 030 628 oder DE 2005 052 070 ausgestaltet sein.

Nach Ausführungsformen der Erfindung können sowohl langfristig unveränderte Daten, also Stammdaten, wie die Sozialversicherungsnummer als auch - im Gegensatz zum Stand der Technik - kurzfristig variable Daten, also Bewegungsdaten, wie der Namen des Arbeitgebers, Beschäftigungsort und dergleichen auf einem Dokument angezeigt werden.

Hierbei sind die langfristigen Daten bevorzugt permanent in das Dokument eingebracht, zum Beispiel mittels Laserpersonalisierung oder anderen dem Fachmann bekannten Methoden zur Personalisierung von ID-Dokumenten. Die temporären Daten, d.h. die Bewegungsdaten, können in einem oder mehreren Anzeigeelementen dargestellt werden. Dadurch steigt der Nutzen des Dokumentes, weil eine größere Menge relevanter Daten auf einem Dokument angezeigt werden können.

Ein erfindungsgemäßes Dokument zeigt diese Bewegungsdaten nach Nutzung des erfindungsgemäßen Aktualisierungs- und Kommunikationsverfahrens, d.h. nach Empfang der Bewegungsdaten durch das Dokument und Überprüfung der Signatur, an und erlaubt bereits dadurch eine erweiterte und verbesserte Kontrollmöglichkeiten.

Bevorzugt werden zwei verschiedene Ausführungen des Sicherheitsdokuments geschaffen. Eine Ausführung wird dabei den Anforderungen von Dokumenteninhabern mit häufig wechselnden versicherungsrelevanten Daten gerecht, z.B. Bauarbeitern mit wechselndem Beschäftigungsort oder Zeitarbeiter mit wechselndem Arbeitgeber. In dieser Ausführungsform verfügt das Sicherheitsdokument über ein integriertes Anzeigeelement, auf dem die sich ändernden Daten aktualisiert und angezeigt werden können.

Eine andere nicht beanspruchte Ausführung wird den Anforderungen von Dokumenteninhabern mit selten wechselnden versicherungsrelevanten Daten gerecht. Dieses Sicherheitsdokument verfügt nicht über ein integriertes Anzeigeelement. Dieses hat den erfindungsgemäßen Vorteil, dass Dokumente für Arbeitnehmer mit einem festen Beschäftigungsort ein kostengünstigeres Dokument verwenden können, welches bis auf die fehlende Anzeigevorrichtung identisch mit dem Dokument für Beschäftigte mit wechselndem Beschäftigungsort sein kann. Durch diese anspruchsgruppengerechte Differenzierung kann der Versicherungsträger seine Kosten optimieren.

In einer weiteren Ausführungsform können auch die langfristigen Personalisierungsdaten in der Anzeigevorrichtung angezeigt werden.

Die Möglichkeit der Aktualisierung des gleichen Dokuments mit neuen Daten ist ein wesentlicher Vorteil von Ausführungsformen der Erfindung, der entscheidenden Mehrnutzen bringt. Die Aktualisierung des Anzeigeelements erfolgt bevorzugt über die eine kontaktlose Schnittstelle und ein stationäres elektronisches Gerät, wie z.B. einen Terminal des Arbeitgebers mit ebenfalls integrierter kontaktloser Schnittstelle, oder ein mobiles elektronisches Gerät, z.B. ein Mobiltelefon, besonders bevorzugt ein nahfeldkommunikationsfähiges Mobiltelefon.

Die erstgenannte Alternative kommt vor allem dann in Betracht, wenn ein Arbeitgeber die Versicherungsdaten seines Arbeitnehmers aktualisieren muss oder an bestimmten Zentralstellen Daten geändert werden, z.B. bei der Deutschen Rentenversicherung. Letztere Alternative kommt insbesondere dann in Frage, wenn der Versicherungsnehmer lediglich den Stand seiner Daten im Register der Versicherungsanstalt abfragen will, jedoch keine Aktualisierung notwendig ist. Die kontaktlose Schnittstelle kann auf einer elektromagnetischen oder kapazitiven Kopplung beruhen. Bevorzugt wird die elektromagnetische Kopplung, insbesondere durch RFID-Technologie verwendet.

Darüber hinaus können auch kontaktbehaftete Dokumente zum Einsatz kommen. Diese sind jedoch weniger bevorzugt, da die Kontakte einem Verschleiß unterliegen.

Nach Ausführungsformen der Erfindung können über ein sicheres Online-Verfahren die Daten auf dem Sicherheitsdokument bei Bedarf aktualisiert werden. Da nur tatsächliche Mitglieder, die auch ihre Versicherungsbeiträge gezahlt haben, aktuelle Daten auf der Karte haben, wird für den Nutzer der Nachweis der Mitgliedschaft in einer Versicherung und der erfolgten Zahlung der Versicherungsbeiträge erleichtert. Dadurch steigt der Bequemlichkeitsnutzen für den Anwender ebenso wie die Sicherheit im Vergleich zum Stand der Technik erheblich.

Beispielsweise wird das Sicherheitsdokument zunächst durch die Versicherungsanstalt an den Versicherungsnehmer ausgestellt und mit den Stammdaten unveränderlich personalisiert, sobald er oder sie Mitglied wird, insbesondere bei Eintritt in die Versicherung nach Abschluss der schulischen Ausbildung. Diese Daten werden optisch sowie optional auch elektrisch personalisiert, jedoch ohne Nutzung des integrierten Anzeigeelementes.

Tritt der Versicherungsnehmer in ein Beschäftigungsverhältnis ein, so wird dieses elektronisch vom Arbeitgeber an die Versicherung gemeldet, welche eine Bestätigung an den Arbeitgeber und / oder Arbeitnehmer sendet. Diese signierten Daten zum Beschäftigungsverhältnis werden durch den Arbeitgeber und / oder Arbeitnehmer auf den integrierten Schaltkreis des Dokuments übertragen und können von dort ausgelesen und / oder mit Hilfe der Anzeigevorrichtung dargestellt werden.

Dabei werden die Daten direkt z.B. über die Nahfeldschnittstelle oder eine Kontaktschnittstelle auf das Dokument geladen und bis zur nächsten Aktualisierung oder nach Ablauf einer bestimmten Zeit angezeigt. Anschließend können die Daten durch einen Kontrolleur oder eine andere Person verifiziert werden. Eine Überprüfung der Signatur der dargestellten Daten stellt hierbei sicher, dass keine manipulierten Einträge vorliegen.

Ausführungsformen der Erfindung ermöglichen es Nutzern solcher Sicherheitsdokumente, sich über das Anzeigeelement jederzeit und an jedem Ort die aktuell auf dem Dokument gespeicherten Daten in digitaler Form anzeigen zu lassen, welche mit Hilfe eines bistabilen Displays dargestellt werden. Aufgrund der weiten Verbreitung von NFC, insbesondere im Mobiltelefonbereich, kann die Anzeige des Dokuments nahezu beliebig aktualisiert werden, da nur eine Energieversorgung über das NFC-Feld erforderlich ist. Der Nutzen liegt hierbei insbesondere im Bereich der bequemen Nutzung und mobilen, jederzeitigen Informationsmöglichkeit. Lese- und Schreibgeräte werden nur zur Aktualisierung der Daten benötigt. Dazu kann der Aufbau einer neuen Infrastruktur bei der Versicherungsanstalt nötig sein, z.B. die Ausstattung mit Lese- und Schreibgeräten für kontaktlose Schnittstellen und die Ausstattung mit mobilen Lesegeräten für die Kontrolleure. Soweit möglich, soll die vorhandene PC-Infrastruktur genutzt werden, um die notwendige Rechenleistung zu erbringen.

In einer Ausführungsform können die Daten wahlweise nach Interaktion zwischen Dokument und Nutzer angezeigt werden. So ist z.B. ein Wechsel zwischen kurz- und langfristigen Daten bzw. ein Scrollen durch längere Informationen möglich. Dies kann durch Bedienung eines Bedienelements (Manipulandum) auf dem Dokument geschehen, z.B. einen Taster oder über ein mobiles oder stationäres Kommunikationsgerät, das in der Lage ist, mit dem integrierten Schaltkreis des Dokumentes zu kommunizieren und den Inhalt des Anzeigeelements bei Bedarf zu verändern.

In einer Ausführungsform werden kurzfristige Daten, d.h. Bewegungsdaten, wie z.B. der Name des Arbeitgebers und der Einsatzort, sowie langfristige Daten, wie z.B. persönliche Stammdaten, gleichzeitig auf unterschiedlichen Bereichen des gleichen Anzeigeelements angezeigt. Je nach Bedarf wird über die Ansteuerung auf bistabile oder OLED-Elemente innerhalb des gleichen Displays zugegriffen.

In einer Ausführungsform werden diese unterschiedlichen Daten gleichzeitig in verschiedenen, in das Dokument integrierten Anzeigeelementen angezeigt. Die Anzeige bestimmter Daten, deren Sichtbarkeit langfristig notwendig ist (z.B. der Nutzerstammdaten) erfolgt auf einem bistabilen Anzeigeelement, und die Anzeige anderer Daten, die nur bei Kontrolle mit Hilfe eines Lesegerätes sichtbar sein sollen (z.B. ob die Versicherungszahlungen tatsächlich erfolgt sind) auf einem OLED-Anzeigeelement. Beide Anzeigeelemente sind in das Dokument integriert. Die Controller-Chips der Anzeigeelemente können in der Lage sein, ebenfalls mit einem Lesegerät zu kommunizieren, bzw. ein Sicherheitschip mit RF-Interface steuert die Controller-ICs an.

In einer Ausführungsform erfolgt die Anzeige aller Daten auf einem vollflächigen bistabilen Anzeigeelement. Bei einem nicht beanspruchten Beispiel erfolgt die Anzeige auf
einem vollflächigem OLED-Anzeigeelement oder auf einem vollflächigen Display in Kombination aus OLED- und bistabiler Anzeige. Im Gegensatz zum Stand der Technik können damit sowohl fotografische als auch alphanumerische Daten auf dem Anzeigeelement des Dokuments angezeigt und bei Bedarf aktualisiert werden. Mit Hilfe von Schlüsseln und Signaturen werden entsprechend abgestufte Rechte zur Aktualisierung der Daten auf dem Anzeigeelement vergeben. Zum Beispiel dürfen Daten generell nur durch die Versicherung, nicht jedoch durch den Arbeitgeber oder -nehmer aktualisiert werden. Der Arbeitgeber darf zum Beispiel die Änderung von Daten mit Bezug auf das Beschäftigungsverhältnis beantragen, während der Arbeitnehmer die Änderung von Stammdaten beantragen kann - wie z.B. die Änderung des Namens. In allen Fällen erfolgt die Einspielung der aktualisierten Daten zwar durch den Arbeitnehmer oder -geber, jedoch erhalten sie die Daten, welche aufgespielt werden können, in signierter elektronischer Form von der Versicherung.

Darüber hinaus schafft die Verbindung des integrierten Schaltkreises mit dem Dokument und optional mit dem Anzeigeelement ein erhöhtes Sicherheitsniveau des Sicherheits- oder Wertdokumentes, das sowohl über das Sicherheitsniveau herkömmlicher nichtelektronischer und elektronischer Sicherheits- und Wertdokumente ohne Anzeigeelement als auch solcher Dokumente mit einzelnen der genannten Elemente ohne deren Kombination hinausgeht.

Für den Kontrolleur, zum Beispiel den Zoll, liegt der zusätzliche Sicherheitsnutzen insbesondere darin, dass die Echtheit des Wert- und Sicherheitsdokuments zweifelsfrei nachgewiesen werden kann, da die Fälschung eines mit integriertem Schaltkreis und elektronischem Anzeigeelement ausgestatteten Dokuments weitaus schwererer ist als die Fälschung eines einfachen Papierdokuments, wie es z.B. der heutige deutsche Sozialversicherungsausweis ist.

Nach Auslaufen der Berechtigung kann der Arbeitgeber entweder auf eine erneute Nutzung verzichten oder die Daten aktualisieren und wie für den Anfang des Anwendungsprozesses beschrieben verfahren. Ändern sich die Stammdaten des Arbeitnehmers, z.B. Adresse oder Name, kann er sie auf dem je nach Ausführungsform vorhandenen integrierten Schaltkreis und/ oder Anzeigeelement aktualisieren. Hierzu ist die Erlaubnis durch eine berechtigte Instanz - in der Regel die Versicherungsanstalt - einzuholen.

Ausführungsformen der Erfindung sind besonders vorteilhaft, da mit dem Dokument der gesamte Anwendungsprozess von der Anmeldung des Versicherten, das Aufspielen der Daten auf das Anzeigeelement und die Verifikation der Daten bis zur Erneuerung der Daten elektronisch und mittels elektronischer Signatur und anderen kryptographischen Verfahren verifizierbar erfolgt.

In in einem Beispiel ist das Dokument kunststoffbasiert ausgeführt, insbesondere als Chipkarte. Durch die Verwendung von Plastikkarten entsteht im Vergleich zu papierbasierten Sicherheitsdokumenten wie dem heutigen deutschen Sozialversicherungsausweis ein weiterer Mehrwert durch die höhere Beständigkeit des Dokuments, z.B. im regelmäßigen Gebrauch oder bei unerwünschten, zerstörerisch wirkenden Einflüssen wie Regen. Dadurch ist der Gebrauch des Dokumentes erleichtert, und der Bequemlichkeitsnutzen für den Anwender steigt, insbesondere bei einer Mitführpflicht für bestimmte Berufe, die oftmals im Freien tätig sind. Das Dokument ist besonders handlich und praktisch durch Nutzung der in ICAO 9303 empfohlenen Formate ID1, ID2 und ID3, ist jedoch nicht zwangsläufig auf diese Dokumentenformate festgelegt. Insbesondere im Vergleich zum heutigen deutschen Sozialversicherungsausweis, der deutlich größer ist, entsteht dadurch ein zusätzlicher Bequemlichkeitsnutzen für den Anwender.

In einer Ausführung kann die Identität der Arbeitnehmer zusätzlich durch Lesen des Personalausweises oder eines ähnlichen Identifikationsdokument geprüft werden, sodass auch das Vorspiegeln falscher Identitäten sofort aufgedeckt wird. Insbesondere in Verbindung mit einer biometrischen Verifikation ist kein Identitätsmissbrauch mehr möglich. Dabei wird der Fingerabdruck oder ein anderes biometrisches Merkmal des Arbeitnehmers mit Hilfe des in das mobile Kontrollgerät integrierten Sensoren aufgenommen und mit dem auf dem elektronischen Identitätsdokument gespeicherten Merkmal verglichen.

In einer Ausführungsform ist das biometrische Merkmal direkt auf dem in der Erfindung beschriebenen Sicherheitsdokument gespeichert. In diesem Fall ist die Prüfung eines Identitätsdokuments wie des Personalausweises nicht notwendig, da mit Hilfe des mobilen Kontrollgerätes die biometrischen Daten des Versicherungsnehmers direkt mit den auf dem erfindungsgemäßen Sicherheitsdokument gespeicherten verglichen werden können.

In einer Ausführungsform findet die Aufnahme des biometrischen Merkmals direkt auf dem Sicherheitsdokument statt, in welches ein Fingerabdruck- oder anderer biometrischer Sensor integriert ist. Damit ist die Prüfung der Biometrie durch das mobile Kontrollgerät nicht notwendig. Vorteile liegen insbesondere im Datenschutz, da die sensiblen biometrischen Daten stets auf dem Sicherheitsdokument des Inhabers und damit in dessen Kontrolle verbleiben.

Im Weiteren werden Ausführungsformen der Erfindung und Beispiele mit Bezugnahme auf die Zeichnungen näher erläutert. Es zeigen:
- Figur 1: ein Blockdiagramm eines Beispiels eines Dokuments,
- Figur 2: ein Flussdiagramm eines Beispiels eines Datenverarbeitungsverfahrens,

- Figur 3: ein Blockdiagramm einer Ausführungsform eines erfindungsgemäßen Dokuments,
- Figur 4: ein Flussdiagramm eines Beispiels eines Datenverarbeitungsverfahrens,

- Figur 5: ein Blockdiagramm einer weiteren Ausführungsform eines erfindungsgemäßen Dokuments,
- Figur 6: ein UML Diagramm einer Ausführungsform eines erfindungsgemäßen Verfahrens,
- Figur 7: ein Flussdiagramm eines Beispiels eines Verfahrens zur Überprüfung des Dokuments,
- Figur 8: eine Draufsicht auf eine Ausführungsform eines erfindungsgemäßen Dokuments vor und nach einer Aktualisierung,
- Figur 9: ein Beispiel eines Dokuments ohne Anzeige,
- Figur 10: eine Ausführungsform des Dokuments mit einem Bedienelement,
- Figur 11: eine Ausführungsform des Dokuments, bei dem die Bewegungsdaten und die Stammdaten auf einer einzigen Anzeige angezeigt werden,
- Figur 12: eine Ausführungsform eines erfindungsgemäßen Dokuments, mit einer Anzeige, die bistabile und OLED-Anzeigeelemente beinhaltet,
- Figur 13: eine Ausführungsform eines erfindungsgemäßen Dokuments mit einer vollflächigen Anzeige,
- Figur 14: eine Ausführungsform eines erfindungsgemäßen Datenverarbeitungsverfahrens.

Elemente der nachfolgenden Beispiele und Ausführungsformen, die einander entsprechen, sind mit denselben Bezugszeichen gekennzeichnet.

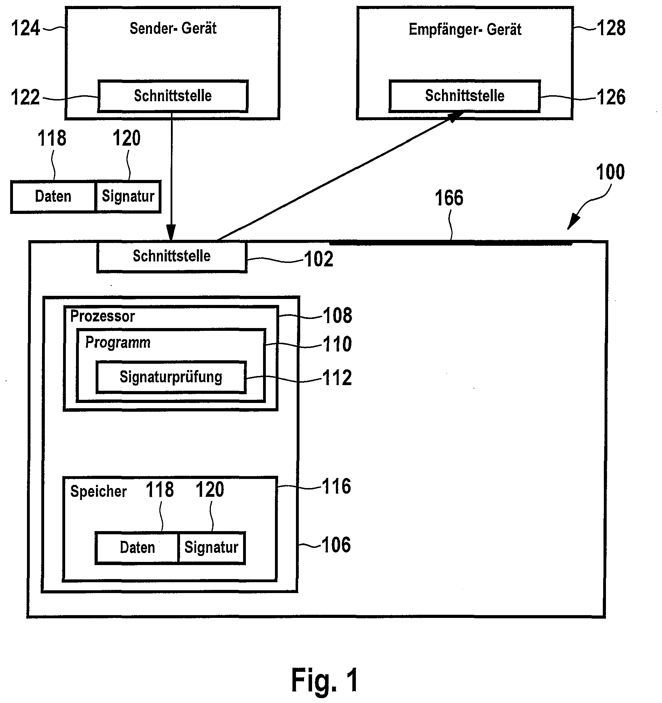

Die Figur 1 zeigt ein Blockdiagramm eines Beispiels eines Dokuments 100. Das Dokument 100 kann papierbasiert und/oder kunststoffbasiert ausgebildet sein. Insbesondere kann es sich bei dem Dokument 100 um eine Chipkarte handeln. Beispielsweise hat das Dokument 100 eines der Formate ID1, ID2 oder ID3, welche von der ICAO empfohlen werden.

Das Dokument 100 hat eine integrierte Schnittstelle 102. Die Schnittstelle 102 kann für eine Nahfeldkommunikation ausgebildet sein, insbesondere nach einem RFID-Verfahren. Über die Schnittstelle 102 kann auch elektrische Energie in das Dokument 100 eingekoppelt werden, so dass dieses keine eigene Energieversorgung benötigt.

Alternativ hat das Dokument einen Energiespeicher, der durch Einkopplung von elektrischer Energie über die Schnittstelle 102 wieder aufgeladen werden kann. Das Dokument 100 beinhaltet eine integrierte elektronische Schaltung 106, insbesondere einen sogenannten Chip, der in einem Chipkartenmodul des Dokuments 100 angeordnet sein kann, wenn es sich bei dem Dokument 100 um eine Chipkarte handelt.

Die integrierte elektronische Schaltung 106 beinhaltet einen Mikroprozessor 108 zur Ausführung eines Programms 110. Das Programm 110 beinhaltet ein Programmmodul 112 für eine Signaturprüfung sowie weitere Programmmodule, die in der Figur 1 nicht dargestellt sind.

Ferner beinhaltet die Schaltung 106 einen elektronischen Speicher 116 zur Speicherung von Daten 118 und einer Signatur 120 der Daten 118. Der Speicher 116 kann als nicht-volatiler Speicher ausgebildet sein, insbesondere, wenn das Dokument keine eigene Spannungsversorgung zur permanenten Versorgung des Speichers mit einer Versorgungsspannung aufweist.

Die Schnittstelle 102 ist zur Kommunikation mit einer entsprechenden Schnittstelle 122 eines Sender-Geräts 124 ausgebildet. Das Dokument 100 kann von dem Sender-Gerät 124 die Daten 118 und deren Signatur 120 empfangen. Bei dem Sender-Gerät 124 kann es sich zum Beispiel um einen Computer, insbesondere einen PC, oder ein Mobilfunkgerät handeln.

Die Schnittstelle 102 kann ferner zur Kommunikation mit einer entsprechenden Schnittstelle 126 eines Empfänger-Geräts 128 ausgebildet sein.

Bei dem Empfänger-Gerät 128 kann es sich zum Beispiel um ein tragbares Kontroll-Gerät handeln, welches ein Kontrolleur bei sich tragen kann. Das Empfänger-Gerät 128 kann auch stationär an einem Zugangspunkt aufgestellt sein, um nach erfolgreicher Kontrolle des Dokuments beispielsweise ein Drehkreuz freizugeben oder eine automatische Tür zu öffnen.

Zur Benutzung des Dokuments wird wie folgt vorgegangen: Zunächst führt z.B. ein Arbeitgeber des Trägers des Dokuments 100 eine Meldung gegenüber einem Server Computer einer Versicherung mit Hilfe des Sender-Gerätes 124 durch. Die Meldung wird beispielsweise auf einem online Portal des Server Computers durchgeführt, indem Bewegungsdaten bezüglich des Trägers der Dokuments eingegeben werden, wie z. B. der geplante Zeitraum und Ort der Beschäftigung des Trägers des Dokuments bei dem Arbeitgeber. Hierdurch kann auch eine Zahlung der fälligen Beiträge durchgeführt oder initiiert werden. Nach erfolgreicher Meldung empfängt das Sender-Gerät 124 entsprechende Daten 118 und deren Signatur 120 von dem Server Computer. Die Daten 118 beinhalten die von dem Arbeitgeber eingegebenen Bewegungsdaten und sind mit der Signatur 120 der Versicherung, die den Server Computer betreibt, oder eines von der Versicherung beauftragten Trust-Centers elektronisch signiert.

Das Dokument 100 empfängt die Daten 118 und deren Signatur 120 mit seiner Schnittstelle 102.

Daraufhin wird das Programmmodul 112 automatisch gestartet, so dass die Signatur 120 einer Signaturprüfung unterzogen wird. Nur wenn die Signaturprüfung erfolgreich ist, das heißt, wenn die Signatur 120 gültig ist, werden die Daten 118 und die Signatur 120 in dem Speicher 116 gespeichert. Bei dem Speicher 116 handelt es sich um einen nicht-flüchtigen Speicher, so dass die Daten 118 und deren Signatur 120 auch dann nicht gelöscht werden, wenn keine Energieversorgung mehr zur Verfügung steht.

Nach einem Beispiel ist die Schnittstelle 126 des Empfänger-Geräts 128 als optischer Empfänger ausgebildet, um das von der Anzeige 104 abgesendete optische Signal, welches die Daten 118 und deren Signatur 120 trägt, zu erfassen.

In einem weiteren Beispiel ist die Anzeige 104 so ausgebildet, dass sie ein optisches Signal erfassen kann. Insbesondere ist dies mit einer Lumineszenz-Löschungsanzeige realisierbar. In diesem Fall ist eine gesonderte Schnittstelle 102 also nicht erforderlich, da deren Funktion von der Anzeige 104 wahrgenommen wird.

Nach einem weiteren Beispiel erfolgt die Kommunikation zwischen dem Dokument 100 und dem Empfänger-Gerät 128 sowohl über die Schnittstelle 102 als auch über das von der Anzeige 104 abgegebene optische Signal. Beispielsweise wird ein Teil der Daten 118 über die Schnittstelle 102 übertragen, wohingegen ein anderer Teil der Daten 118 von der Anzeige 104 in der Form eines optischen Signals gesendet wird.

Das Empfänger-Gerät 128 kann die Authentizität der von dem Dokument 100 empfangenen Daten 118 durch Prüfung von deren Signatur 120 feststellen.

Die Echtheit des Dokumentes 100 kann mittels Techniken des Wert- und Sicherheitsdrucks gegen Fälschung und/oder Verfälschung abgesichert sein. Beispielhaft aber nicht ausschließlich sind dies Farbverlauf (Irisdruck), Mikroschrift, Durchsichtsfenster und/oder -passer, Kippfarbeffekte, Fluoreszenzfarben, Melierfasern, Volumen- und/oder Prägehologramme, Infrarotfarben, Metamerie, Interferenzeffekte sowie Wasserzeichen. Diese und weitere Techniken des Wert- und Sicherheitsdrucks sind dem Fachmann an sich bekannt und können zum Beispiel van Renesse, Optical Document Security, third edition, Artech House, 2005 entnommen werden. Stammdaten bezüglich des Trägers des Dokuments 100, wie z.B. Name, Geburtsdatum, Wohnort und dergleichen können als Aufdruck 166 oder mittels einer anderen Personalisierungstechnik auf dem Dokument 100 an- oder in das Dokument 100 eingebracht sein. Alternativ oder zusätzlich können auch Stammdaten und deren Signatur über die Schnittstelle 102 von dem Dokument empfangen werden. Wenn die Signatur valide ist, werden die Stammdaten in dem Speicher 116 gespeichert. Zur Prüfung der Validität der Signatur 120 durch das Programmmodul 112 kann beispielsweise so vorgegangen werden, dass ein mit der Signatur 120 empfangenes Zertifikat einer Zertifikatskettenprüfung unterzogen wird. Es wird ferner von dem Programmmodul geprüft, ob in dem Zertifikat eine ausreichende Berechtigung eingetragen ist, um die Daten 118 in den Speicher 116 zu schreiben. Alternativ oder zusätzlich kann das Dokument 100 anhand des Zertifikats prüfen, ob die Daten 118 von einer Institution herrühren, die zum Schreiben der Daten 118 autorisiert ist. Hierzu können in dem Dokument 100 eine oder mehrere Namen oder Kennungen solcher autorisierten Institutionen gespeichert sein.

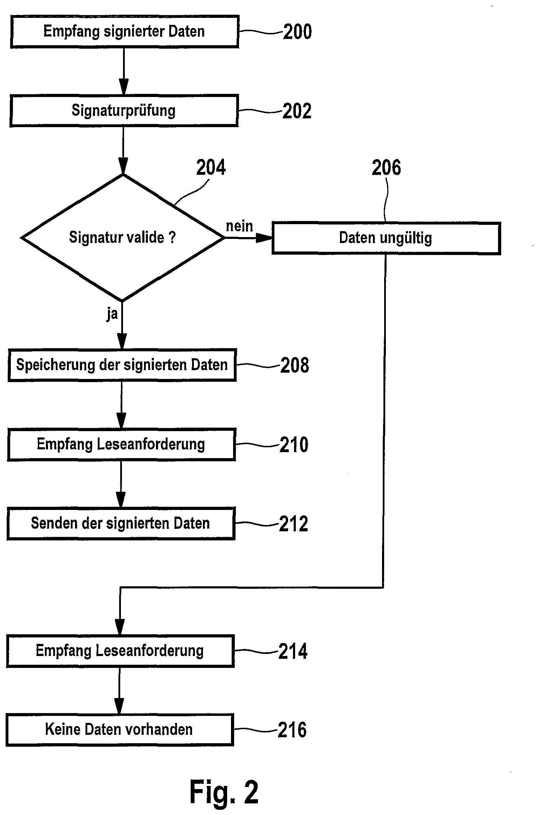

Die Figur 2 zeigt ein Flussdiagramm eines Beispiels eines Verfahrens. In dem Schritt 200 empfängt das Dokument (vgl. Dokument 100 der Figur 1) signierte Daten von einem Sender-Gerät, wie zum Beispiel einem Computer oder einem Mobilfunkgerät. Daraufhin prüft das Dokument in dem Schritt 202 die Gültigkeit der Signatur der Daten. Die Signaturprüfung kann durch eine Zertifikatskettenprüfung erfolgen. Hierzu kann das Dokument in dem Schritt 200 zusammen mit den Daten und deren Signatur ein Zertifikat empfangen, welches dann in dem Schritt 202 für die Signaturprüfung verwendet wird.

Falls die Signatur valide ist - Schritt 204 - erfolgt in dem Schritt 208 die Speicherung zumindest eines Teils der Daten in einem nicht-volatilen Speicher des Dokuments.

Zusätzlich zur Überprüfung der Validität der Signatur kann in dem Schritt 204 als weitere Bedingung geprüft werden, ob die Institution, von der die Daten generiert worden sind, zum Schreiben der Daten in das Dokument autorisiert ist. Eine solche Überprüfung kann anhand des Zertifikats vorgenommen werden. Beispielsweise ist in dem Zertifikat eine solche Schreibberechtigung der Institution spezifiziert. Nur wenn eine solche Schreibberechtigung in dem Zertifikat spezifiziert ist, die Zertifikatskettenprüfung bestanden wird und die Signatur valide ist, werden die Daten mit der Signatur in dem nicht-volatilen Speicher des Dokuments gespeichert.

Alternativ oder zusätzlich können in einem nicht-volatilen Speicher des Dokuments Namen oder Kennungen der Institution oder der Institutionen gespeichert sein, die zum Schreiben in das Dokument autorisiert sind. Nur wenn die Daten von einer solchen Institution herrühren, können sie zusammen mit der Signatur in den nicht-volatilen Speicher des Dokuments geschrieben werden.

Wenn die Bedingungen, die in dem Schritt 204 geprüft werden, erfüllt sind, werden also die Daten und deren Signatur in dem Schritt 208 in dem nicht-volatilen Speicher des Dokuments gespeichert. Im gegenteiligen Fall werden die Daten und deren Signatur in dem Schritt 206 von dem Dokument gelöscht.

Zur Überprüfung des Dokuments kann ein Empfänger-Gerät, insbesondere ein Kontroll-Gerät, verwendet werden.

In diesem Fall empfängt das Dokument in dem Schritt 210 eine Leseanforderung von dem Empfänger-Gerät. Das Dokument sendet daraufhin die Daten und deren Signatur an das Empfänger-Gerät in dem Schritt 212.

Das Empfänger-Gerät kann daraufhin die Signatur der Daten überprüfen, und so deren Authentizität feststellen. Die Daten können dann auf einer Anzeige des Empfänger-Geräts wiedergegeben werden.

Wenn dagegen die Daten in dem Schritt 206 von dem Dokument gelöscht worden sind und nicht in den nicht-volatilen Speicher gespeichert worden sind, geht der Empfang einer solchen Leseanforderung von dem Empfänger-Gerät in dem Schritt 214 ins Leere, d.h. bleibt unbeantwortet. Das Dokument kann in dem Schritt 216 auf die Leseanforderung des Empfänger-Geräts beispielsweise aber auch mit einem Signal antworten, um zu signalisieren, dass in dem nicht-volatilen Speicher keine validen Daten gespeichert sind.

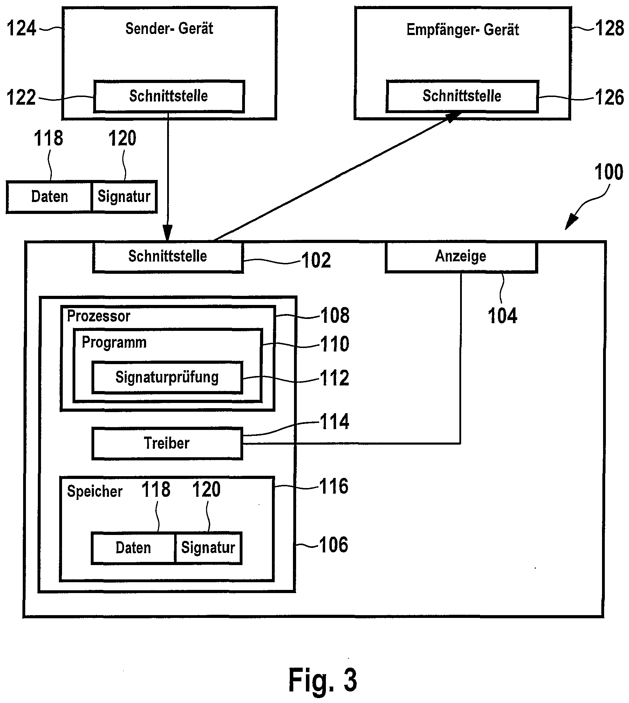

Die Figur 3 zeigt eine Ausführungsform des Dokuments 100. In der Ausführungsform der Figur 3 hat das Dokument 100 eine in den Dokumentenkörper integrierte Anzeige 104. Insbesondere kann es sich bei der Anzeige 104 um eine Anzeige mit bistabilen Anzeigeelementen handeln. Alternativ oder zusätzlich kann die Anzeige 104 LED-, insbesondere OLED-Anzeigeelemente aufweisen. Die Schaltung 106 beinhaltet bei dieser Ausführungsform zusätzlich einen Treiber 114 zur Ansteuerung der Anzeige 104.

Die Schaltung 106, die Schnittstelle 102 und/oder die Anzeige 104 können als diskrete Bauelemente ausgeführt sein oder einen mehr oder weniger hohen Integrationsgrad aufweisen. Insbesondere kann der Treiber 114 abweichend von der Darstellung der Figur 3 als integraler Bestandteil der Anzeige 104 ausgebildet sein. Nach dem Empfang der Daten 118 und deren Signatur 120 wird durch das Programmmodul 112 eine Prüfung vorgenommen. Zumindest wird überprüft, ob die Signatur 120 gültig ist. Zusätzlich kann ein mit der Signatur 120 empfangenes Zertifikat einer Zertifikatskettenüberprüfung unterzogen werden. Ferner kann zum Beispiel anhand des Zertifikats geprüft werden, ob seitens der Institution, die die Daten signiert hat, eine Schreibberechtigung zum Schreiben der Daten 118 in das Dokument 100 vorliegt.

Wenn die Prüfbedingungen des Programmmoduls 112 erfüllt sind, so werden die Daten 118 und deren Signatur 120 in dem nicht-volatilen Speicher 116 des Dokuments 100 gespeichert, so wie das auch bei der Ausführungsform der Figur 1 der Fall ist. Zusätzlich wird der Treiber 114 durch das Programm 110 angesteuert, um zumindest einen Teil der Daten 118 über die Anzeige 104 auszugeben. Hierzu kann der Treiber 114 auf das Programm 110 auf den Speicher 116 zugreifen, um die Daten 118 auszulesen, um damit die Anzeige 104 anzusteuern.

Die Ausgabe der Daten 118 über die Anzeige 104 kann in einer visuell und kognitiv für einen menschlichen Benutzer erfassbaren Form erfolgen und/oder in Form eines nur maschinenlesbaren optischen Signals, welches durch einen menschlichen Benutzer visuell und/oder kognitiv nicht erfassbar ist.

Von besonderem Vorteil bei dieser Ausführungsform ist, dass auch wenn das Empfänger-Gerät 128 nicht zur Verfügung steht, um das Dokument 100 zu kontrollieren, das Dokument 100 einen hohen Grad an Vertrauenswürdigkeit hat, da die Anzeige der Daten 118 nur dann erfolgt, wenn die Signaturprüfung durch gegebenenfalls die Prüfung der weiteren Bedingungen durch das Programmmodul 112 erfolgreich war. Vorzugsweise ist zumindest ein Teil der Anzeigeelemente der Anzeige 104 bistabil ausgebildet, um zumindest die wesentlichen Daten 118 anzeigen zu können, auch dann, wenn keine elektrische Energieversorgung für das Dokument 100 zur Verfügung steht.

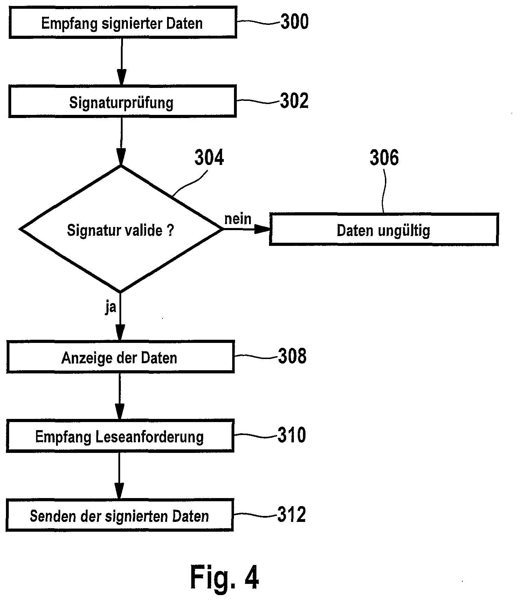

Die Figur 4 zeigt ein Flussdiagramm eines Beispiels eines Verfahrens, wobei die Schritte 300 bis 306 analog zu den Schritten 200 bis 206 im Beispiel der Figur 2 sind. Sofern die Prüfbedingungen in dem Schritt 304 erfüllt sind, werden die Daten und deren Signatur in dem Schritt 308 in einem nicht-volatilen Speicher des Dokuments gespeichert und zusätzlich auf einer in das Dokument integrierten Anzeige angezeigt. Die Wiedergabe der Daten auf der Anzeige kann dabei so erfolgen, dass sie für einen menschlichen Benutzer visuell und kognitiv erfassbar ist. Der Träger des Dokuments erhält so eine visuelle Rückmeldung dahingehend, dass die Daten erfolgreich auf sein Dokument übertragen worden sind und dort geprüft und akzeptiert worden sind.

Aufgrund der Wiedergabe der Daten auf der Anzeige des Dokuments kann eine Überprüfung des Dokuments durch eine Sichtprüfung vorgenommen werden.

Alternativ oder zusätzlich zu der Sichtprüfung kann ein Empfänger-Gerät für die Überprüfung des Dokuments verwendet werden. Wenn das Dokument in dem Schritt 310 eine solche Leseanforderung von einem Empfänger-Gerät empfängt, so sendet es daraufhin die Daten und deren Signatur an das Empfänger-Gerät im Schritt 312. Das Empfänger-Gerät kann daraufhin die Signatur der Daten überprüfen, und so deren Authentizität feststellen. Die Daten können dann auf einer Anzeige des Empfänger-Geräts wiedergegeben werden, beispielsweise um sie mit den auf der Anzeige des Dokuments wiedergegebenen Daten zu vergleichen. Hierdurch wird die Vertrauenswürdigkeit des Dokuments weiter erhöht.

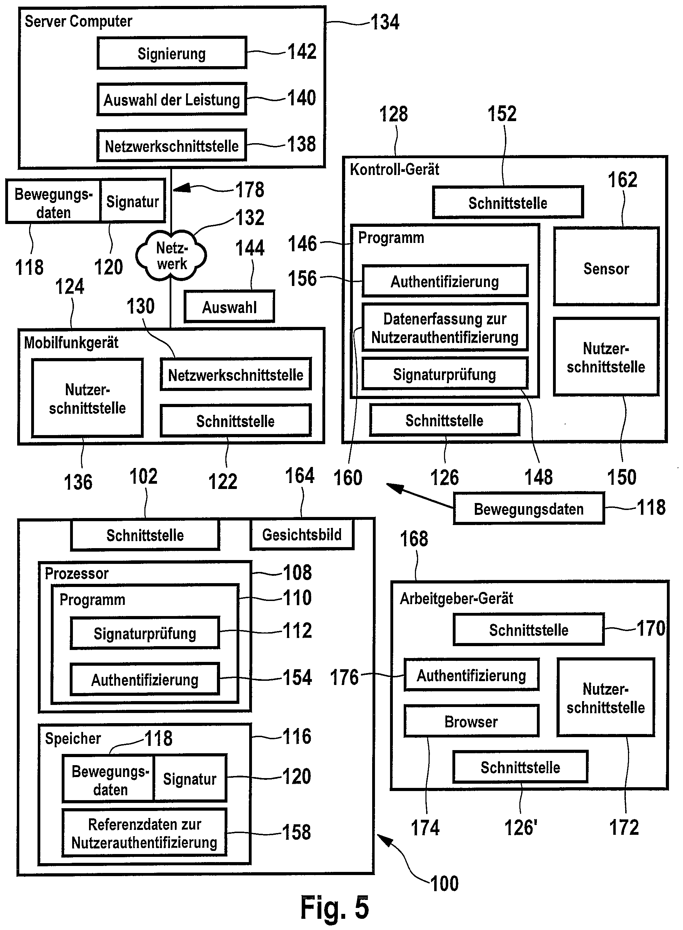

Die Figur 5 zeigt eine weitere Ausführungsform eines erfindungsgemäßen Dokuments 100.

Das Sender-Gerät 124 ist hier als Mobilfunkgerät, insbesondere als Mobiltelefon ausgebildet, so dass das Dokument 100 über seine Schnittstelle 102 mit der Schnittstelle 122 des Mobilfunkgeräts kommunizieren kann. Das Sender-Gerät 124 hat eine Netzwerk-Schnittstelle 130, über die das Mobilfunkgerät über ein Netzwerk 132 mit einem Server-Computer 134 kommunizieren kann.

Beispielsweise handelt es sich bei dem Netzwerk 132 um ein digitales Mobilfunknetz, über welches das Sender-Gerät 124 eine Internet-Verbindung, beispielsweise mittels eines sogenannten Mobile IP-Protokolls mit dem Server-Computer 134 aufbauen kann. Das Sender-Gerät 124 hat eine Nutzer-Schnittstelle 136, welche eine Tastatur und/oder eine Spracheingabevorrichtung beinhalten kann.

Der Server-Computer 134 hat eine Netzwerk-Schnittstelle 138 zur Kommunikation über das Netzwerk 132. Der Server-Computer 134 hat ferner ein Programmmodul 140, welches es einem Nutzer des Sender-Geräts 124 ermöglicht, eine bestimmte Leistung auszuwählen. Beispielsweise kann die gewünschte Leistung in dem erstmaligen Empfang der in dem Dokument zu speichernden Daten 118 oder deren Aktualisierung bestehen. Beispielsweise wird durch das Programmmodul 140 ein Online-Portal einer Sozialversicherung realisiert.

Der Server-Computer 134 hat ferner ein Programmmodul 142 oder eine entsprechende Hardware-Komponente zur Generierung digitaler Signaturen, insbesondere signaturgesetzkonformer elektronischer Signaturen.

Zur Spezifizierung der Daten 118 kann ein Gerät 168 verwendet werden. Bei dem Gerät 168 kann es sich zum Beispiel um einen Computer, insbesondere einen Personalcomputer, handeln. Das Gerät 168 hat eine Netzwerk-Schnittstelle 170, mit der eine Verbindung zu dem Servercomputer 134 über das Netzwerk 132 aufgebaut werden kann. Das Gerät 168 hat ferner eine übliche Nutzer-Schnittstelle 172, wie zum Beispiel ein grafisches Nutzer-Interface.

Auf dem Gerät 168 kann ein übliches Browser-Programm 174 installiert sein, mit Hilfe dessen über die Schnittstelle 170 auf das von dem Programmmodul 140 zur Verfügung gestellte Online-Portal zugegriffen werden kann.

Beispielsweise wird über die Nutzer-Schnittstelle 172 eine URL des Online-Portals eingegeben, sodass die entsprechende Internetseite mit Hilfe des Browser-Programms 174 auf einer Anzeige des Geräts 168 angezeigt wird. Über die Nutzer-Schnittstelle 172 können dann in das Online-Portal Daten eingegeben werden. Dies kann eine vorherige Authentifizierung des Geräts 168 und/oder von dessen Benutzer mit Hilfe eines Authentifizierungsmoduls 176 des Geräts 168 voraussetzen.

Neben den Bewegungsdaten 118 wird über die Nutzer-Schnittstelle 172 der Träger des Dokuments 100 spezifiziert, den die Bewegungsdaten 118 betreffen. Dies kann zum Beispiel durch Eingabe von Namen und Geburtsdatum des Trägers des Dokuments 100 erfolgen oder durch eine eindeutige Kennung, wie zum Beispiel dessen email Adresse, Mobiltelefonnummer oder einer anderen eindeutigen Kennung zum Versenden einer elektronischen Nachricht. Entsprechende Daten zur Spezifizierung des Trägers werden von dem Gerät 168 an das online Portal gesendet.

Die email Adresse oder Mobiltelefonnummer des Mobilfunkgeräts 124 kann aber auch serverseitig gespeichert sein. Mit Hilfe zum Beispiel des Namens und des Geburtsdatums kann der Servercomputer 134 die email Adresse oder Mobilfunknummer ermitteln, um die Nachricht 178 an einen Computer des Trägers des Dokuments oder dessen Mobilfunkgerät 124 versenden zu können.

Die von dem Nutzer des Geräts 168 in das Online-Portal des Servercomputers 134 eingegebenen Daten können insbesondere Bewegungsdaten 118 beinhalten. Nach Empfang und Überprüfung der Bewegungsdaten 118 sowie ggf. nach Authentifizierung des Geräts 168 oder dessen Benutzer gegenüber dem Online-Portal generiert das Programmmodul 140 eine Nachricht 178, die eine Signatur 120 der Bewegungsdaten 118 und Bewegungsdaten 118 beinhaltet.

Die Daten 118 werden von dem Programmmodul 142 signiert. Statt eines Programmmoduls kann hierfür auch eine Hardware-Komponente verwendet werden, wie zum Beispiel eine Chipkarte.

Die Daten 118 mit deren Signatur 120 werden dann als Nachricht 178 von dem Server-Computer 134 über das Netzwerk 132 an das Mobilfunkgerät 124 gesendet. Das Mobilfunkgerät 124 empfängt die Nachricht 178 mit dessen Netzwerk-Schnittstelle 130 und leitet die Daten 118 und die Signatur 120 über seine Schnittstelle 122 an das Dokument 100 weiter, welches die Daten 118 und die Signatur 120 mit seiner Schnittstelle 102 empfängt.

Statt eines Mobilfunkgeräts kann hierfür auch ein Computer, insbesondere ein PC, oder ein anderes netzwerkfähiges Gerät verwendet werden.

Nach der Prüfung der Signatur 120 durch das Programmmodul 112 werden die Daten 118 und die Signatur 120 in dem Speicher 116 gespeichert. Der Treiber 114 wird von dem Programm 110 angesteuert, um zumindest einen Teil der Daten 118 wiederzugeben. Der Nutzer erhält so eine visuelle Rückmeldung, so dass er sicher sein kann, dass valide Daten 118 zu seinem Dokument 100 übertragen worden sind.

Die über die Anzeige 104 wiedergegebenen Daten 118 können für eine Sichtprüfung des Dokuments 100 verwendet werden.

Alternativ oder zusätzlich kann eine Kontrolle des Dokuments 100 mit Hilfe eines Empfänger-Geräts 128 ausgeführt werden, welches hier als Kontroll-Gerät ausgebildet ist.

Das Empfänger-Gerät 128 hat ein Programm 126 mit einem Programmmodul 148 zur Signaturprüfung. Zur Kontrolle der Berechtigung des Trägers des Dokuments kann das Empfänger-Gerät 128 beispielsweise über seine Schnittstelle 126 eine Leseanforderung an das Dokument 100 senden. Das Dokument 100 sendet daraufhin die Daten 118 und deren Signatur 120 an das Empfänger-Gerät 128, welches daraufhin die Gültigkeit der Signatur 120 mit Hilfe des Programmmoduls 148 prüft. Wenn die Signatur 120 gültig ist, so wird ein entsprechendes Signal durch das Programm 146 generiert, welches die Gültigkeit der Signatur 120 angibt. Dieses Signal kann über eine Nutzerschnittstelle 150 an einen Kontrolleur ausgegeben werden und/oder maschinell weiter verarbeitet werden.

Die Daten 118 können auf der Nutzerschnittstelle 150 angezeigt werden. Das Empfänger-Gerät 128 kann über eine Netzwerk-Schnittselle 152 verfügen, um über das Netzwerk 132 auf den Server-Computer 134 zuzugreifen.

Der Server-Computer 134 kann über eine Datenbank verfügen, in der die Daten 118 gespeichert sind. Das Empfänger-Gerät 128 kann daher über das Netzwerk 132 einen Abgleich mit dem Server-Computer 134 vornehmen, um zu prüfen, ob die von dem Dokument 100 empfangenen Daten 118 mit denen in der Datenbank des Server-Computers 134 gespeicherten Daten übereinstimmen. Beispielsweise können die Daten 118 in der Datenbank des Server-Computers 134 zwischenzeitlich gelöscht worden sein, weil zum Beispiel eine Zahlung nicht eingegangen ist. Falls dies der Fall ist, kann ein entsprechendes Signal von dem Programm 146 generiert und über die Nutzer-Schnittstelle 150 ausgegeben werden.

Wenn die Schnittstelle 102 und die Schnittstelle 126 zum Beispiel als Funkschnittstelle ausgebildet sind, insbesondere als RFID-Schnittstelle, so ist es prinzipiell möglich, dass ein lesender Zugriff auf die Daten 118, die in dem Speicher 116 des Dokuments 100 gespeichert sind, unbemerkt und ohne Einwilligung des Trägers des Dokuments 100 vorgenommen werden könnte. Um dies zu vermeiden, muss sich das Empfänger-Gerät 128 gegenüber dem Dokument 100 zunächst authentifizieren und seine Berechtigung für einen Zugriff auf die Daten 118 nachweisen, bevor das Programm 110 die Daten 118 und deren Signatur 120 aus dem Speicher 116 ausliest, um sie über die Schnittstelle 102 an das Empfänger-Gerät 128 zu übertragen.

Für die Authentifizierung des Empfänger-Geräts 128 beinhaltet das Programm 110 ein Programmmodul 154 und das Programm 146 ein Programmmodul 156. Durch Ausführung der Programmmodule 154 und 156 kann eine Authentifizierung des Empfänger-Geräts 128 gegenüber dem Dokument 100 erfolgen. Beispielsweise erfolgt die Authentifizierung mit Hilfe eines kryptographischen Protokolls, basierend auf einem asymmetrischen Schlüsselpaar. Insbesondere können die Programmmodule 154 und 156 ein Verfahren für eine sogenannte Basic Access Control (BAC) und/oder eine Extended Access Control (EAC) implementieren.

Ferner kann es auch erforderlich sein, dass sich das Dokument 100 gegenüber dem Empfänger-Gerät 128 authentifizieren muss, damit das Empfänger-Gerät 128 die Daten 118 als valide akzeptiert, und das entsprechende Freigabesignal generiert.

Beispielsweise kann in dem Speicher 116 ein Zertifikat des Dokuments 100 gespeichert sein. Für seine Authentifizierung überträgt das Dokument 100 sein Zertifikat an das Empfänger-Gerät 128, welches daraufhin beispielsweise mittels eines Challenge-Response-Verfahrens prüft, ob das Dokument 100 im Besitz des geheimen Schlüssels ist, welcher dem Zertifikat zugeordnet ist.

Ferner kann auch eine Kontrolle dahingehend vorgesehen sein, ob nicht das Dokument 100 dem rechtmäßigen Besitzer entwendet worden ist. Dies kann dadurch erfolgen, dass der rechtmäßige Besitzer des Dokuments 100 den Verlust gegenüber dem Server-Computer 134 meldet, zum Beispiel, indem er eine entsprechende Eingabe über das Netzwerk 132 tätigt.

Das Dokument 100 und/oder die Daten 118 werden daraufhin in der Datenbank des Server-Computers 134 als gesperrt gekennzeichnet. Wenn durch das Empfänger-Gerät 128 ein Zugriff auf die Datenbank über die Netzwerk-Schnittstelle 152 erfolgt, so erhält das Empfänger-Gerät 128 Kenntnis davon, dass das Dokument 100 als gesperrt in der Datenbank gekennzeichnet ist. Das Programm 146 generiert daraufhin ein entsprechendes Signal, welches über die Nutzer-Schnittstelle 150 ausgegeben wird. Bei einer Kontrolle kann das Dokument 100 daraufhin eingezogen werden.

Alternativ oder zusätzlich muss sich der Träger des Dokuments 100 gegenüber dem Dokument 100 authentifizieren. Dies kann durch Eingabe einer Kennung, insbesondere einer sogenannten PIN, unmittelbar in das Dokument 100 erfolgen, wenn dies über eine entsprechende Nutzer-Schnittstelle verfügt, oder durch Eingabe der PIN in die Nutzer-Schnittstelle 150 des Empfänger-Geräts 128 oder ein an das Empfänger-Gerät 128 angeschlossenes Chipkarten-Terminal, zum Beispiel der Klasse 2.

Alternativ oder zusätzlich können in dem Speicher 116 biometrische Referenzdaten 158 für die Nutzer-Authentifizierung gespeichert sein. Das Dokument 100 kann einen Biometrie-Sensor aufweisen, über den die entsprechenden biometrischen Daten des Trägers des Dokuments 100 erfasst werden. Die erfassten biometrischen Daten werden dann mit den Referenzdaten 158 durch das Programm 110 verglichen. Bei hinreichender Übereinstimmung werden die weiteren Funktionen des Dokuments 100 freigeschaltet, das heißt, nur dann, wenn sich der Träger des Dokuments 100 erfolgreich authentifizieren konnte, werden die Daten 118 und die Signatur 120 von dem Dokument 100 an das Empfänger-Gerät 128 gesendet.

Alternativ kann die Datenerfassung zur Nutzer-Authentifizierung seitens des Empfänger-Geräts 128 erfolgen. Hierzu beinhaltet das Programm 146 ein Programmmodul 160 sowie einen Sensor 162 zur Erfassung der biometrischen Daten. In diesem Fall kann die Authentifizierung des Trägers des Dokuments 100 wie folgt erfolgen:
Zunächst muss sich das Empfänger-Gerät 128 gegenüber dem Dokument 100 authentifizieren. Daraufhin überträgt das Dokument 100 die Referenzdaten 158 an das Empfänger-Gerät 128. Die zuvorige Authentifizierung des Empfänger-Geräts 128 ist hier besonderes vorteilhaft, um einen angemessenen Schutz für die biometrischen Referenzdaten 158 zu gewährleisten. Die biometrischen Daten des Trägers des Dokuments 100 werden sodann mit Hilfe des Programmmoduls 160 und des Sensors 162 erfasst und von dem Programm 146 auf Übereinstimmung mit den Referenzdaten geprüft. Bei hinreichender Übereinstimmung gilt der Träger des Dokuments 100 als authentisch. Kann die Authentizität des Trägers des Dokuments 100 nicht nachgewiesen werden, so kann wiederum vorgesehen sein, dass das Dokument 100 eingezogen wird.

Alternativ kann das Empfänger-Gerät 128 mit Hilfe des Sensor 162 die biometrischen Daten erfassen und über die Schnittstelle 126 an das Dokument 100 übertragen. Das Dokument führt die Prüfung durch und übermittelt das Ergebnis über die Schnittstelle 102 an das Empfänger-Gerät 128 und/oder stellt dieses auf der Anzeige 104 dar. Vorteil dieser Ausführungsform ist, dass die biometrischen Referenzdaten das Dokument nicht verlassen und so deren besondere Sicherheit gewährleistet ist.

Das Gerät 168 kann auch so ausgebildet sein, dass es unmittelbar mit dem Dokument 100 kommunizieren kann. Hierzu hat das Gerät 168 eine Schnittstelle 126'. Diese Ausführungsform ermöglicht es, dass die Daten 118 mit deren Signatur 120 von dem Servercomputer 134 nicht an das Mobilfunkgerät 124, sondern an das Gerät 168 gesendet werden, welche diese mit seiner Schnittstelle 170 empfängt. Von dem Gerät 168 werden dann die Daten 118 und deren Signatur 120 von der Schnittstelle 126' an die Schnittstelle 102 des Dokuments 100 übertragen.

Beispielsweise handelt es sich bei dem Dokument 100 um einen Sozialversicherungsausweis. Bei dem Träger des Dokuments 100 handelt es sich um einen Arbeitnehmer. Dessen Arbeitgeber ist dazu verpflichtet, die Tätigkeit des Arbeitnehmers gegenüber einer Sozialversicherung zu melden, die den Servercomputer 134 betreibt, und die entsprechenden Beiträge zur Sozialversicherung an die Sozialversicherung abzuführen.

Hierzu nimmt der Arbeitgeber mit seinem Gerät 168 Kontakt mit dem Online-Portal des Servercomputers 134 auf, um die entsprechenden Daten 118 gegenüber der Versicherung zu melden, das heißt zum Beispiel den Arbeitsort und den Zeitraum der Tätigkeit des Mitarbeiters an dem Arbeitsort, sowie Daten zur eindeutigen Identifizierung des Arbeitnehmers. Nachdem diese Meldung gegenüber dem Online-Portal erfolgt ist, generiert der Servercomputer 134 die Nachricht 178, um diese an das Mobilfunkgerät 124 oder ein anderes netzwerkfähiges Gerät des Arbeitnehmers zu senden, sodass dieser die Bewegungsdaten 118 und die Signatur 120 auf seinem Dokument 100 speichern kann. Alternativ werden die Bewegungsdaten 118 und deren Signatur 120 an das Arbeitgeber-Gerät 168 gesendet und von dort auf das Dokument 100 übertragen.

Die Übertragung der Nachricht 178 kann in Form eines so genannten Push- oder Pull-Dienstes erfolgen. Beispielsweise sendet der Arbeitnehmer mit Hilfe seines Mobilfunkgeräts 124 Daten 144 an den Servercomputer 134, um die Sendung der Nachricht 178 zu veranlassen.

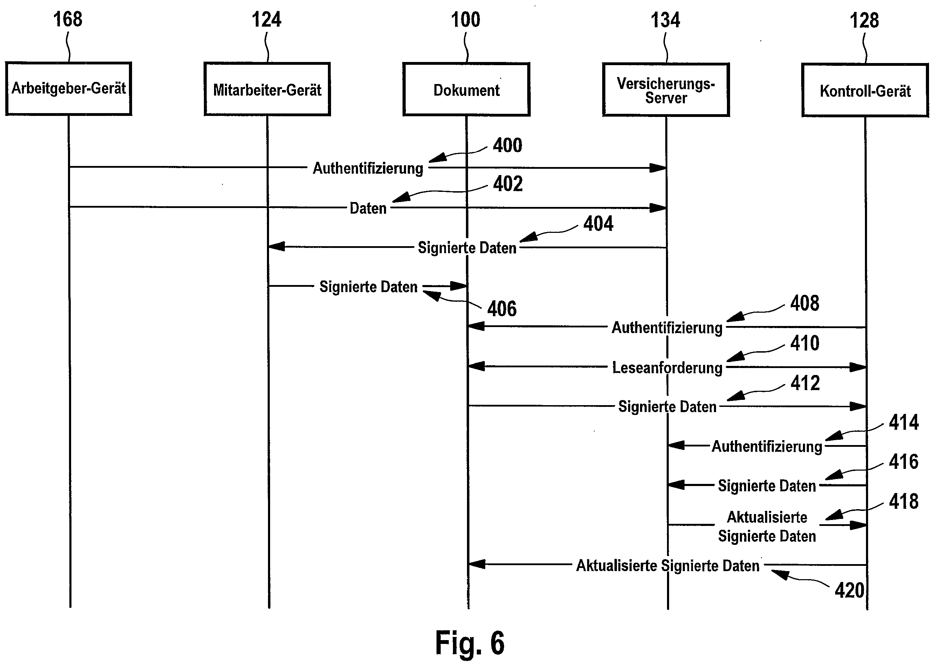

Die Figur 6 zeigt ein entsprechendes Ablaufdiagramm. Zunächst wird eine Netzwerkverbindung, zum Beispiel über das Internet, zwischen dem Gerät 168 des Arbeitgebers und dem Servercomputer 134 der Versicherung aufgebaut. Hierüber erfolgt in dem Schritt 400 eine Authentifizierung des Geräts 168 und/oder dessen Nutzers. Nachdem die Authentifizierung gegenüber dem Servercomputer 134 erfolgt ist, werden die Daten 118 von dem Gerät 168 in dem Schritt 40 zum Beispiel über das Internet an den Servercomputer 134 übertragen. Dies kann über eine geschützte Verbindung erfolgen, beispielsweise nach einem Secure-Messaging-Verfahren.

Die Eingabe der Daten 118 in das Gerät 168 und die Veranlassung der Sendung der Daten in dem Schritt 402 kann manuell erfolgen oder automatisch, zum Beispiel durch ein Enterprise Ressource Planning Programm, welches auf dem Gerät 168 ausgeführt wird, beispielsweise ein SAP-Programm.

In dem Schritt 404 sendet der Servercomputer 134 eine Nachricht 178 an das Mobilfunkgerät 124 des betreffenden Mitarbeiters, welcher von dem Arbeitgeber in dem Schritt 402 gegenüber dem Servercomputer 134 angegeben worden ist. Dies kann automatisch erfolgen (so genannter Push-Dienst) oder nur auf ausdrückliche Veranlassung des Mitarbeiters, d.h. als so genannter Pull-Dienst.

Die signierten Daten werden dann in dem Schritt 406 von dem Mobilfunkgerät 124 auf das Dokument 100 übertragen. Das Dokument 100 prüft dann die Signatur der Daten, beispielsweise gemäß des Beispiels der Figur 2 oder der Ausführungsform der Figur 4.

Zur Prüfung des Dokuments 100 wird so vorgegangen, dass sich das Empfänger-Gerät 128, welches hier als Kontroll-Gerät ausgebildet ist, und/oder dessen Nutzer gegenüber dem Dokument 100 in dem Schritt 408 authentifizieren muss. Nach erfolgreicher Authentifizierung wird in dem Schritt 410 von dem Empfänger-Gerät 128 eine Leseanforderung an das Dokument 100 gesendet. Das Dokument 100 sendet daraufhin die signierten Daten in dem Schritt 412 an das Empfänger-Gerät 128. Das Empfänger-Gerät 128 kann daraufhin nochmals die Signatur der Daten prüfen. Falls das Dokument 100 über eine Anzeige verfügt, können die von dem Dokument in dem Schritt 412 empfangenen Daten mit den auf der Anzeige dargestellten Daten verglichen werden.

Optional kann das Empfänger-Gerät 128 in dem Schritt 414 zum Beispiel über das Internet mit dem Servercomputer 134 eine Verbindung aufbauen und sich darüber authentifizieren. In dem Schritt 416 sendet das Empfänger-Gerät 128 dann die von dem Dokument 100 in dem Schritt 412 empfangenen signierten Daten an den Servercomputer 430, sodass dieser die Daten mit den dort gespeicherten aktuellen Daten abgleichen kann. Sofern die von dem Dokument 100 empfangenen signierten Daten nicht mehr aktuell sind, sendet der Servercomputer 134 in dem Schritt 418 die aktualisierten signierten Daten an das Empfänger-Gerät 128 zurück, welches diese aktualisierten signierten Daten dann in dem Schritt 420 an das Dokument weiterleitet, sodass diese dort gespeichert werden können.

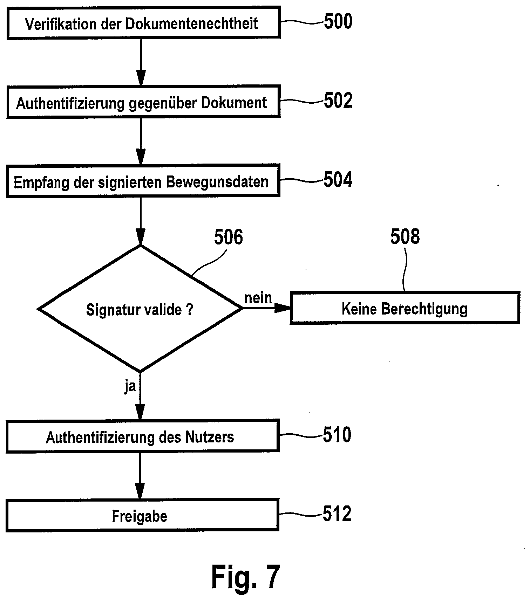

Die Figur 7 zeigt ein Flussdiagramm eines Beispiels eines Verfahrens zur Kontrolle des Dokuments.

In dem Schritt 500 wird die Echtheit des Dokuments überprüft. Beispielsweise hat das Dokument ein oder mehrere Sicherheitsmerkmale des Wert- oder Sicherheitsdrucks. Diese Merkmale werden zunächst in an sich bekannter Art und Weise überprüft. Eine solche Überprüfung kann rein visuell oder mit Hilfe des Empfänger-Geräts durchgeführt werden; beispielsweise hat das Empfänger-Gerät hierzu eine UV-Lichtquelle, um ein Sicherheitsmerkmal zu überprüfen, das nur im UV-Licht sichtbar wird.

In dem Schritt 502 erfolgt daraufhin eine Authentifizierung des Empfänger-Geräts gegenüber dem Dokument, beispielsweise durch ein BAC- und/oder EAC-Verfahren. In dem Schritt 504 empfängt das Empfänger-Gerät die signierten Daten von dem Dokument. Die Signatur wird daraufhin in dem Schritt 506 geprüft. Wenn die Signatur nicht valide ist, so wird in dem Schritt 508 ein Signal ausgegeben, wonach keine Berechtigung vorliegt. In diesem Fall wird der Träger des Dokuments beispielsweise zur Entrichtung des Fahrpreises aufgefordert.

Wenn die Signatur valide ist, so wird in dem Schritt 510 eine Authentifizierung des Nutzers vorgenommen, um sicherzustellen, dass das Dokument nicht entwendet worden ist. Die Prüfung der Authentizität des Nutzers kann auch vor der Prüfung der Signatur erfolgen.

In dem Schritt 512 wird dann ein Freigabesignal generiert, welches signalisiert, dass der Träger des Dokuments eine valide Berechtigung zur Nutzung der Beförderungsdienstleistung hat.

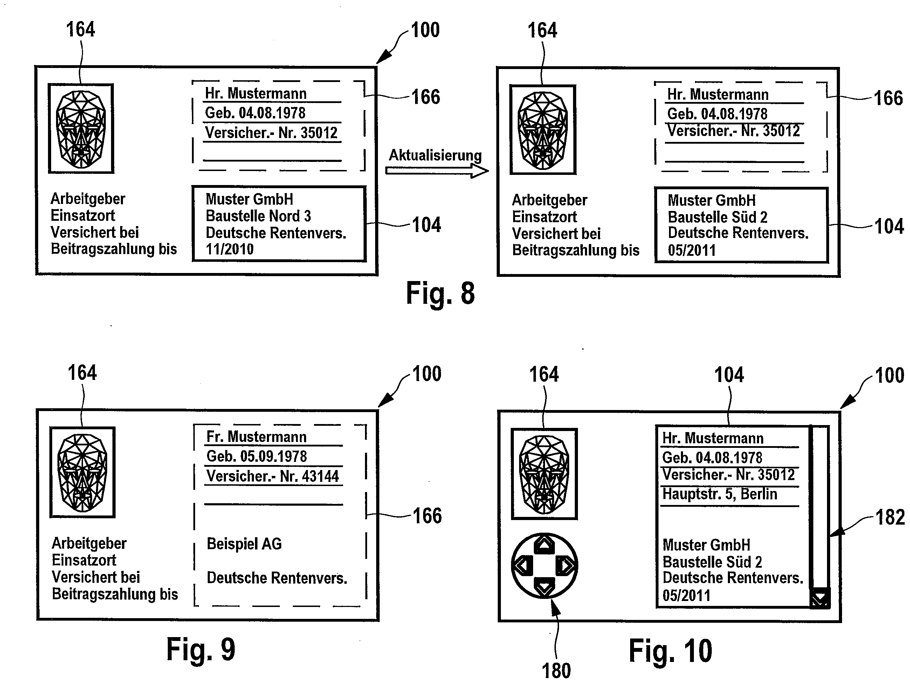

Die Figur 8 zeigt eine Draufsicht auf eine Ausführungsform eines erfindungsgemäßen Dokuments 100. Das Dokument 100 hat ein kartenförmiges Format, insbesondere gemäß ISO 7810. Das Dokument 100 hat ein Gesichtsbild 164 des Trägers des Dokuments 100 sowie einen Aufdruck 166 mit Stammdaten, wie zum Beispiel den Namen, das Geburtsdatum sowie eine Versicherungsnummer. Das Dokument 100 hat ferner eine Anzeige 104 zur Anzeige der Daten 118, bei denen es sich um Bewegungsdaten handelt. Zur Aktualisierung der Daten 118 wird beispielsweise von dem Online-Portal eine Nachricht 178 mit solchen aktualisierten Daten 118 gesendet, die nach Signaturprüfung in dem Speicher des Dokuments 100 gespeichert und auf der Anzeige 104 angezeigt werden. Beispielsweise zeigt die Anzeige 104 vor der Aktualisierung die Bewegungsdaten "Muster GmbH, Baustelle Nord 3, Deutsche Rentenversicherung, 11/2010" und nach der Aktualisierung "Muster GmbH, Baustelle Süd 2, Deutsche Rentenversicherung, 05/2011".

Die Figur 9 zeigt dagegen ein Beispiel des Dokuments 100 ohne Anzeige 104. Bei diesem Beispiel werden die Daten 118 lediglich in den Speicher des Dokuments 100 gespeichert, nicht aber angezeigt. Eine Sichtprüfung des Dokuments 100 hinsichtlich der Bewegungsdaten ist also nicht möglich. Hierzu ist ein Empfänger-Gerät erforderlich, vgl. hierzu insbesondere das Beispiel der Figur 1 und die Ausführungsform der Figuren 3, 5 und 6.

Die Figur 10 zeigt eine Ausführungsform eines erfindungsgemäßen Dokuments 100 mit einer relativ großflächigen Anzeige 104 und einem Bedienelement 180. Auf der Anzeige 104 werden neben den Bewegungsdaten auch die Stammdaten angezeigt. Über das Bedienelement 180 können die auf der Anzeige 104 wiederzugebenden Daten ausgewählt werden. Beispielsweise wird hierzu auf der Anzeige 104 ein Scrollbalken 182 eingeblendet, der mit Hilfe des Bedienelements 180 bewegt werden kann.

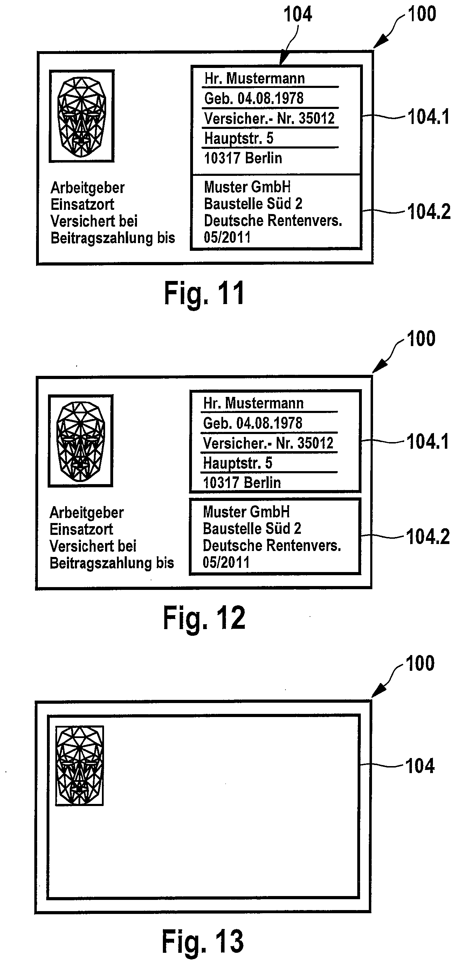

In der Ausführungsform gemäß Figur 11 des Dokuments 100 hat die Anzeige 104 zwei unterschiedliche Bereiche 104.1 und 104.2, wobei in dem Bereich 104.1 die Stammdaten und in dem Bereich 104.2 die Bewegungsdaten angezeigt werden. In der Ausführungsform der Figur 12 hat das Dokument 100 hierzu zwei verschieden ausgebildete Anzeigebereiche. Beispielsweise ist der Anzeigebereich 104.1 als bistabile Anzeige und der Anzeigebereich 104.2 als OLED-Anzeige ausgebildet.

In der Ausführungsform gemäß Figur 13 ist die Anzeige 104 als vollflächige OLED-Anzeige ausgebildet, sodass sowohl die Stammdaten als auch die Bewegungsdaten und auch das Gesichtsbild 164 auf der Anzeige 104 erscheinen. Insbesondere kann die Anzeige 104 aus einer Kombination von bistabilen und OLED-Anzeigeelementen bestehen.

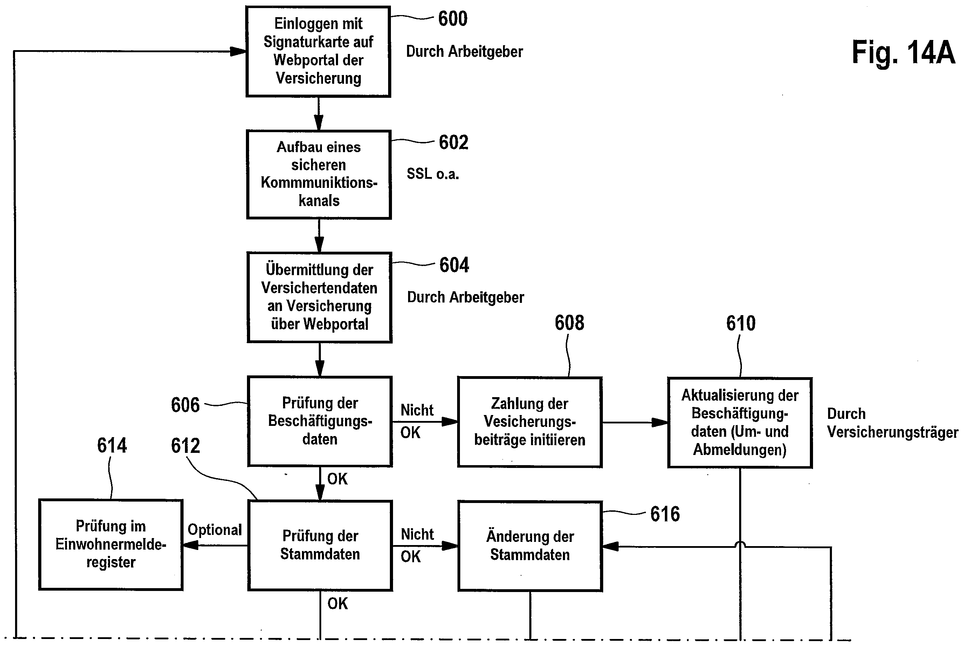

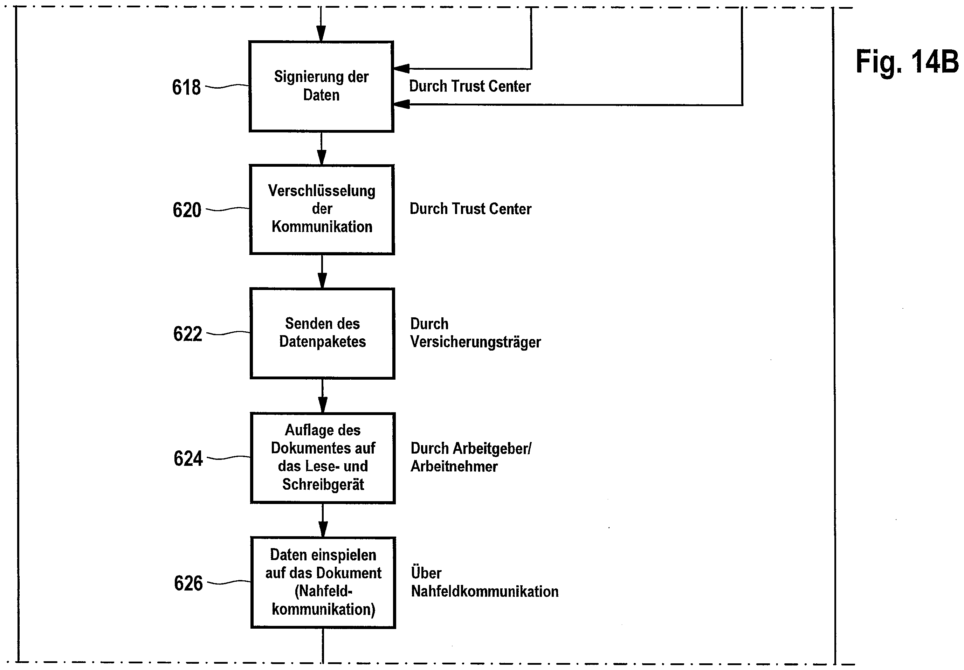

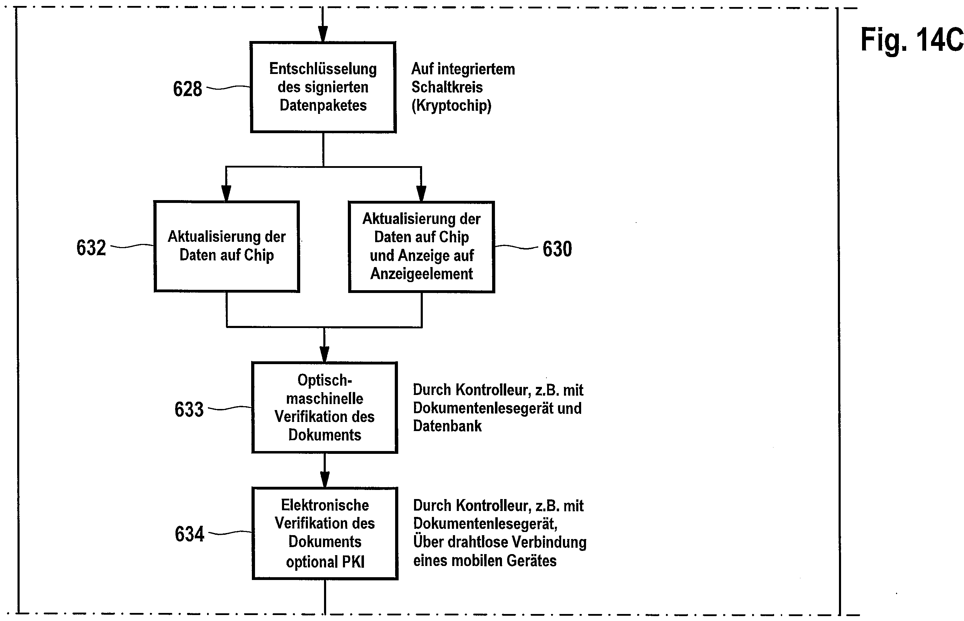

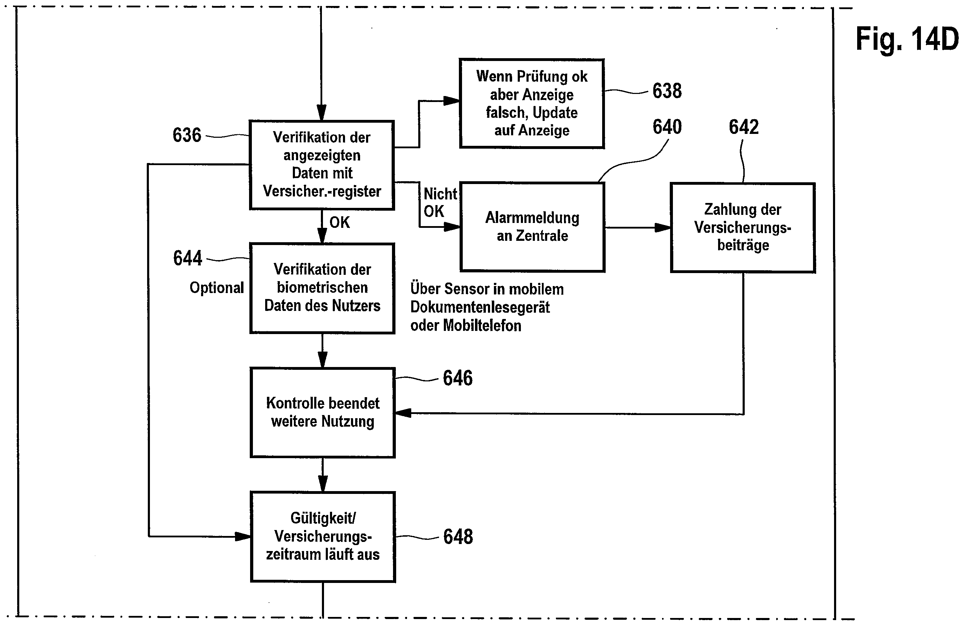

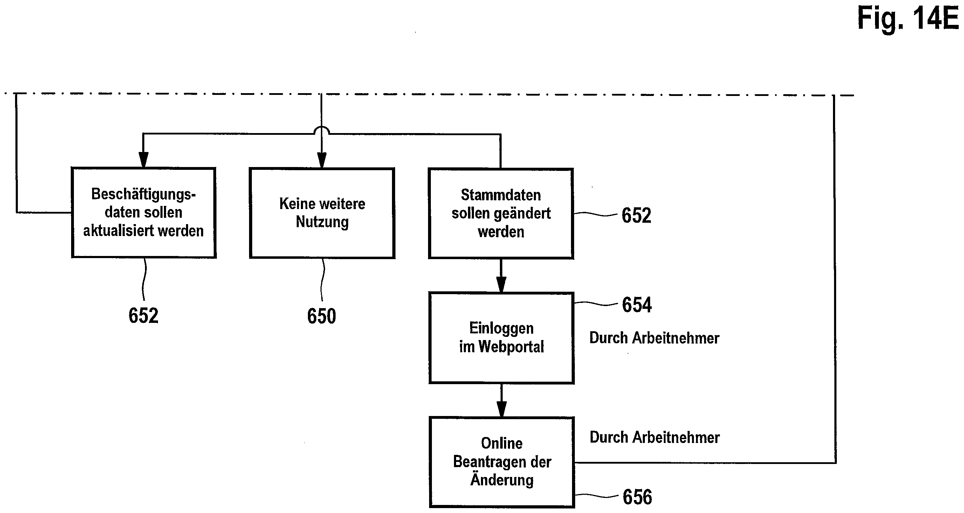

Eine Ausführungsform eines erfindungsgemäßen Verfahrens zur Online-Anmeldung, Ummeldung und das Ansehen der Daten durch Arbeitgeber und Arbeitnehmer sowie zur anschließenden Versendung der Daten, Aktualisierung auf dem Dokument 100, d.h. z. B. dem Versicherungsausweis, und der anschließenden mobilen Verifikation zeigt die Fig. 14:
Ein Arbeitgeber, der Beschäftigte mit oder ohne Tragepflicht des Ausweises einstellen oder zu veränderten Bedingungen beschäftigen will, muss zunächst über ein Terminal, z.B. einen PC, die aktuellen Daten an den Versicherungsträger melden. Dazu loggt sich der Arbeitgeber mit Hilfe einer eindeutig ihm zugeordneten Signaturkarte oder eines anderen Authentifizierungs-Tokens zunächst sicher auf ein Webportal (vgl. online portal in der Ausführungsform der Fig. 5) oder eine andere Anwendung des Server Computers der Versicherungsanstalt ein und identifiziert sich (Schritt 600).

Anschließend wird ein sicherer Verbindungskanal zur Kommunikation zwischen dem Client des Arbeitgebers und der Versicherungsanstalt geöffnet, z.B. mittels SSL (Schritt 602).

Der Arbeitgeber kann jetzt die Daten des Arbeitnehmers online in das Webportal neu eintragen oder bestehende Datensätze verändern und die Daten per Klick an die Versicherungsanstalt übermitteln, z.B. die Deutsche Rentenversicherung (Schritt 604). Dabei ist zwischen Stammdaten wie Versicherungsnummer, Geburtsdatum und Anschrift einerseits und beschäftigungsbezogenen Daten wie Name und Adresse des Arbeitgebers und des Beschäftigungsortes andererseits zu unterscheiden. Vorzugsweise ist der Arbeitgeber nur zur Meldung und Aktualisierung der Bewegungsdaten, nicht aber der Stammdaten autorisiert.

Auf dem Server Computer werden sowohl Stamm- als auch beschäftigungsbezogene Bewegungsdaten einer Plausibilitätsprüfung durch das unterzogen (Schritt 606), z.B. ob der entsprechende Arbeitnehmer und der Arbeitgeber ihre Versicherungsbeiträge gezahlt haben, ob der Arbeitgeber gemeldet ist usw. Sind die Versicherungsbeiträge nicht gezahlt worden, wird die Zahlung initiiert (Schritt 608), z.B. durch Auslösen einer schriftlichen Forderung an den Arbeitgeber. Anschließend können die Beschäftigungsdaten aktualisiert werden (Schritt 610).

Auch die Stammdaten werden überprüft (Schritt 612), z.B. ob der Arbeitnehmer im Versicherungsregister bekannt ist. Optional findet ein Abgleich mit dem Einwohnermelderegister zum Abgleich bestimmter Stammdaten des Arbeitnehmers wie der Adresse statt (Schritt 614). Erforderlichenfalls werden die von dem Server Computer gespeicherten Stammdaten in dem Schritt 616 geändert, um diese zu aktualisieren. Danach werden die Daten durch ein in der Versicherungsanstalt vorhandenes oder von einer dritten Partei bereitgestelltes Trust Center mit Hilfe kryptographischer Verfahren signiert (Schritt 618), verschlüsselt (Schritt 620) und somit vor Veränderung und Ausspähung geschützt

Das signierte Datenpaket wird zurück an den Arbeitgeber geschickt (Schritt 622). Der Arbeitgeber wird von der Anwendung z.B. der Geräts 168 (vgl. Ausführungsform der Fig. 5) aufgefordert, das Sicherheitsdokument, z.B. das Dokument 100, des Arbeitnehmers auf das z.B. kontaktlose Lese- und Schreibgerät 168 zu legen (Schritt 624).

Anschließend wird das signierte Datenpaket mittels des sicheren Kommunikationskanals auf den integrierten Schaltkreis des Sicherheitsdokuments übertragen (Schritt 626), z.B. über die Schnittstelle 126' des Geräts 168.

Erst auf dem Sicherheitsdokument wird das Datenpaket wieder entschlüsselt (Schritt 628). Somit ist die Unverändertheit der Daten gewährleistet, und die aktuellen Daten sind auf dem Dokument verfügbar. Das Sicherheitsdokument kann daher ausschließlich mit von der Versicherungsanstalt signierten Datenpaketen beschrieben und aktualisiert werden, und nur dann, wenn die Versicherungsbeiträge bezahlt bzw. deren Einzüge bereits durch den Arbeitgeber autorisiert wurden. In dieser der Ausführungsform werden anschließend sowohl die Daten auf dem integrierten Schaltkreis wie auch die Daten auf dem zusätzlich integrierten Anzeigeelement aktualisiert (Schritt 630). Im Beispiel ohne Anzeigeelement werden nur die Daten auf dem integrierten Schaltkreis aktualisiert (Schritt 632).

Zur Ansprache der Schaltung 106 des Dokuments 100 und der wechselseitigen Authentifizierung des Geräts 168 und der Schaltung 106 können hochsichere Verfahren wie Extended Access Control zum Einsatz kommen. Auf diese Weise kann das Sicherheitsdokument nur durch berechtigte Stellen (Arbeitgeber mit dem berechtigten Lesegerät) aktualisiert werden, und die Integrität der Daten ist durch die Plausibilitätsprüfung der Versicherungsanstalt gewährleistet.

Ein wesentlicher Vorteil von Ausführungsformen der Erfindung besteht darin, dass gewährleistet werden kann, dass auch kurzfristig Beschäftigte sozialversichert sind und dies jederzeit auf dem Sicherheitsdokument in der Ausführungsform mit integriertem Anzeigeelement angezeigt wird, und zwar ohne dass bei einer Änderung der Bewegungsdaten das Dokument durch ein neues ersetzt werden muss. Darüber hinaus kann die Mitgliedschaft mobil kontrolliert werden:
Im Unterschied zur bisherigen papierbasierten Variante des Sozialversicherungsausweises können Kontrolleure, z.B. auf Baustellen, sicher sein, dass inkorrekte Angaben auf dem Ausweis nicht durch die verzögerte Ausstellung eines neuen bzw. aktualisierten papierbasierten Dokuments entstanden sind - sofern diese kurzfristigen Daten heute überhaupt auf dem Ausweis aufgedruckt sind- sondern der Dokumenteninhaber tatsächlich nicht versichert ist. Dies wird einerseits durch das integrierte Anzeigeelement des erfindungsgemäßen Dokuments erreicht, das nur dann aktualisiert wird, wenn tatsächlich eine solche Versicherung existiert, andererseits durch das erfindungsgemäße Aktualisierungs- und Verifikationsverfahren. Gleichzeitig können Arbeitnehmer mit selten wechselndem Beschäftigungsort bzw. Arbeitgeber ein Beispiel des Dokuments ohne Anzeigeelement nutzen. Dadurch wird dem Versicherungsträger eine zielgruppenorientierte Differenzierung der Versicherungsausweise möglich und die Kosten können im Vergleich zu einer Vollausstattung mit Displaykarten gesenkt werden.

Zusätzlich kann ein mobiler oder stationärer Kontrolleur auf seinem Kontrollgerät prüfen, wie viele und welche Arbeitnehmer im System der Versicherungsanstalt für den jeweiligen Arbeitgeber und den jeweiligen Einsatzort gemeldet sind. Unstimmigkeiten fallen daher sofort auf.

Ein Kontrolleur kann mit Hilfe eines mobilen oder stationären Kontrollgerätes sowohl die Ausführungsform mit integriertem Anzeigeelement als auch das Beispiel ohne integriertes Anzeigeelement, jedoch mit integriertem Schaltkreis prüfen. Das erfindungsgemäße Verfahren beinhaltet nicht nur zur Anzeige und Aktualisierung der Daten, sondern auch der Verifikation der Dokumentenechtheit sowie der nutzer- und leistungsbezogenen Daten verwendet werden. Heute erfolgt die Verifikation von nutzer- und leistungsbezogenen Daten von Sozialversicherungsausweisen ausschließlich visuell. Es erfolgt mit dem genannten Dokument bisher weder eine automatische Fälschungserkennung noch das elektronische Auslesen eines integrierten Schaltkreises noch eine elektronische Verifikation der Dokumentenechtheit mit Hilfe des integrierten Schaltkreises.

Die Fig. 14 zeigt, wie der Prozess der Anwendung des Dokumentes mit der Verifikation fortschreitet. Ein Kontrolleur oder eine andere Person verifiziert zunächst die Echtheit des Dokumentes auf visuellem Weg und/oder mit Hilfe einer automatischen Fälschungserkennung (Schritt 632). Automatische Fälschungserkennung auf Basis von Verfahren der Bild- und Mustererkennung ist nach dem Stand der Technik insbesondere im Bereich hoheitlicher Reise- und Identifikationsdokumente bekannt, jedoch nicht im Bereich der Sozialversicherung.

Nach der Erfindung werden auf das beschriebene Sicherheitsdokument maschinell prüfbare Sicherheitsmerkmale aufgebracht, welche die automatische Fälschungserkennung auch für solche Dokumente ermöglichen, z.B. durch automatisierten Vergleich mit Referenzdaten in einer dezentralen oder zentralen Datenbank.

Als nächster Schritt wird die Dokumentenechtheit elektronisch verifiziert (Schritt 634). Diese elektronische Verifikation der Dokumentenechtheit erfolgt durch Auslesen des integrierten Schaltung und Prüfung der Zertifikate des Dokumentes. Darüber hinaus ist insbesondere die kombinierte Echtheitsprüfung mit automatischen optischen und elektronischen Methoden für die betrachteten Anwendungen neu. Durch die Kombination aus visueller, optisch-maschineller und elektronischer Kontrolle erreicht ein derart ausgestattetes Dokument ein bisher nicht realisierbares Sicherheitsniveau.

Auch die rein visuelle Überprüfung eines erfindungsgemäßen Dokuments stellt eine deutliche Verbesserung des Sicherheitsstandards dar. Dieses gilt insbesondere, da für ein solches Dokument Elemente des klassischen Wert- und Sicherheitsdrucks mit den elektronischen Mitteln wie dem Anzeigeelement kombiniert werden können. Die Darstellung der variablen Daten erfolgt auf dem gleichen Dokument.

In einem nächsten Schritt 636 des Verfahrens erfolgt der Online-Abgleich der auf dem Anzeigeelement angezeigten oder nur auf dem Chip gespeicherten Daten mit dem Versicherungsregister, z.B. um zu prüfen, ob der Arbeitnehmer gemeldet ist und die Versicherungsbeiträge gezahlt wurden. Wird dabei festgestellt, dass keine Beanstandungen bestehen, die Anzeige oder der Chipinhalt aber nicht aktuell sind, kann der Kontrolleur mit Hilfe des mobilen Kontrollgerätes die Anzeige oder die nur auf dem Chip gespeicherten Daten aktualisieren - als Serviceleistung für Arbeitnehmer und Arbeitgeber (Schritt 638). Werden Beanstandungen festgestellt, z.B. das Fehlen der Versicherungszahlungen, kann der Arbeitgeber die Versicherungsbeiträge vor Ort bezahlen, z.B. durch Einwilligung in einen Lastschrifteinzug, die mit Hilfe des Kontrollgerätes dokumentiert wird. Wird die Zahlung nicht geleistet, kann der Kontrolleur mit dem Kontrollgerät einen Alarm an die Zentrale senden (Schritt 640), und diese kann entsprechend reagieren, um die Versicherungsbeiträge einzutreiben (Schritt 642).

In einer weiteren Ausführungsform können auf dem Chip des Dokuments biometrische Daten gespeichert werden. Dadurch kann der Kontrolleur oder eine andere Person im nächsten Schritt 644 die biometrischen Daten zur Verifikation mit den Live-Daten des Dokumenteninhabers nutzen. Dabei kann der Abgleich außerhalb des integrierten Schaltkreises in einem externen Verifikationssystem erfolgen.

Besonders bevorzugt erfolgt der Abgleich auf dem Schaltkreis des Dokumentes selbst, so dass sensitive biometrische Daten das Dokument nicht verlassen. Das Ergebnis des Abgleichs, z.B. Übereinstimmung oder Nichtübereinstimmung, kann auf dem Anzeigeelement des Dokuments und/oder des Verifikationsgerätes angezeigt werden. Daran ist im Vergleich zum Stand der Technik insbesondere neu, dass die Ergebnisse des biometrischen Abgleichs auf dem Anzeigeelement des Dokuments dargestellt werden. Die biometrischen Daten selbst (andere als Gesichtsbild) werden in dieser bevorzugten Ausführungsform nicht auf dem Anzeigeelement dargestellt.

In einer Ausführungsform erfolgt darüber hinaus im Falle einer Kontrolle eine direkte Verifikation der Berechtigung des Dokumenteninhaber und/oder Verifikationsgerätes über eine Online-Verbindung mit einer zuständigen Instanz, z.B. im Rahmen einer Public Key Infrastruktur (PKI), in der die Berechtigung des Dokumenteninhabers oder Verifikationsgerätes hinterlegt ist, verwaltet und geprüft wird. Auf dem Dokument kann ein bestimmtes Zertifikat gespeichert sein, das während des Verifikationsvorganges die Gültigkeit und Echtheit des Dokumentes beweist und auch zur Generierung von Schlüsselmaterial für die Kommunikation zwischen Schaltkreis und Lesegerät dient. Darüber hinaus kann auch das Lesegerät ein Zertifikat an das Dokument übermitteln, um sich gegenüber dem Dokument als autorisiertes Überprüfungsgerät auszuweisen. Auf diese Weise kann verhindert werden, dass Unbefugte Sozialversicherungsdaten von Personen in der Umgebung unbefugt auslesen.

In einer Ausführungsform erfolgt eine kombinierte Verschlüsselung der Kommunikation zwischen Dokument 100 und Empfänger-Gerät 128 mit Hilfe der optisch auf dem Anzeigeelement angezeigten und der elektronisch auf dem integrierten Schaltkreis hinterlegten Information. Dadurch entsteht zusätzliche Sicherheit gegen Manipulationsversuche, wie zum Beispiel in der WO2006061780 oder der DE102006031422 derselben Anmelderin beschrieben.

Neben der Prüfung mit Hilfe des genannten mobilen Kontroll-Gerätes können in einer weiteren Ausführungsform die beschriebenen Prüfungen des Dokuments und Dokumenteninhabers mit Hilfe eines stationären Dokumentenlesegerätes durchgeführt werden. Dabei werden in der Regel mehrere nicht-elektronische Sicherheitsmerkmale sowie die elektronische Echtheit des Dokuments und die biometrischen Daten des Nutzers geprüft und dem Prüfenden das Ergebnis der Prüfung dargestellt.

In einer Ausführungsform können Daten auf der Anzeige im Dokument als 2D-Barcode dargestellt und durch ein Dokumentenlesegerät optisch ausgelesen und überprüft werden. Bevorzugt ist die Verwendung eines Displays, welches nur während der Verifikation den Barcode anzeigt, ansonsten andere Daten oder Motive darstellt. So wird das Aussehen der Karte nicht negativ beeinflusst. Besonders bevorzugt erfolgt die Darstellung des Barcodes in einer rein maschinenlesbaren Form, während gleichzeitig ein sichtbarer anderer Inhalt für einen menschlichen Betrachter angezeigt wird, wie zum Beispiel in der DE102007002385 derselben Anmelderin dargelegt.

Nach Durchführung der genannten Anwendungsschritte ist die Verifikation beendet, und das Dokument kann weiter durch den Arbeitnehmer mitgeführt werden, wenn eine Mitführpflicht besteht, oder gelagert werden, wenn keine Mitführungspflicht besteht.

Läuft die Gültigkeit der Berechtigungen bzw. der Versicherungszeitraum aus (Schritt 648), oder wechselt der Beschäftigungsort oder der Arbeitgeber, kann der Arbeitgeber die beschäftigungsbezogenen online aktualisieren (Schritt 652) und diese Daten dann nach Durchführung des Online-Verfahrens wie oben beschrieben sofort auf das Sicherheitsdokument aufspielen, d.h. die Anwendung beginnt wieder von vorne. Dadurch kann der Arbeitgeber auf Veränderungen bei den Beschäftigungsdaten kurzfristig reagieren, was eine deutliche Erleichterung im Gegensatz zum bisherigen Verfahren bedeutet.

Darüber hinaus können Arbeitnehmer sich den aktuellen Stand ihrer Versicherungsdaten jederzeit auf der Anzeige des Sicherheitsdokuments anzeigen lassen. Darüber hinaus haben sie die Möglichkeit, sich die über sie gespeicherten Stamm- oder andere Daten zum Beispiel über das Webportal anzusehen. Der Versicherungsnehmer muss sich dazu mit Hilfe eines geeigneten Mechanismus, z.B. einer Signaturkarte, authentifizieren. Dies erhöht die Transparenz und den Datenschutz für Arbeitnehmer. Änderungen können online bei der Versicherungsanstalt beantragt werden, wo das Anliegen bearbeitet wird. Dadurch soll Missbrauch durch Versicherungsnehmer vorgebeugt werden.

Wird keine weitere Nutzung des Dokumentes gewünscht (Schritt 650), wird keine Aktualisierung vorgenommen. Das Dokument ist dann ungültig und wird entweder an den Versicherungsträger zurückgeschickt oder bei der nächsten Kontrolle durch den Kontrolleur als ungültig erkannt und eingezogen. Ferner kann auch eine Aktualisierung der nach Ausführungsformen der Erfindung zu den Daten 118 gehörenden Stammdaten erfolgen (Schritt 652). Hierzu loggt sich der Arbeitnehmer in das online Portal des Server Computers ein (Schritt 654) und gibt - nach seiner Authentifizierung - die geänderten Stammdaten ein (Schritt 656). Von dort wird zu dem Schritt 616 gegangen, so dass die geänderten Stammdaten signiert und an das Dokument übertragen werden.

Im Vergleich zum Stand der Technik bietet dieses sichere Online-Verfahren zur Anmeldung, Ummeldung und Einsicht der Daten deutliche Vorteile hinsichtlich Sicherheit und Bequemlichkeit. Ein Vorteil des Verfahrens liegt in seiner Transparenz. Sowohl Arbeitnehmer als auch Arbeitgeber können jederzeit Einsicht in ihre Daten nehmen und Änderungen zeitnah vornehmen bzw. vornehmen lassen.
Ein weiterer Vorteil liegt darin, dass auf dem Sicherheitsdokument im Unterschied zum existierenden deutschen Sozialversicherungsausweis auch ein Lichtbild in elektronischer Form gespeichert sein kann. Dieses ermöglicht zum Beispiel die Verwendung biometrischer Verfahren und führt somit zu einer besseren Verbindung zwischen Dokument und Dokumenteninhaber.

Vorteil eines erfindungsgemäßen Verfahrens und des beschriebenen Sicherheitsdokuments besteht in einer hohen Kompatibilität, welche sich aus der Vielzahl der verwendbaren Interfaces ergibt. Kontaktbehaftete Karten sind weit verbreitet und finden vor allem im Bereich der Signaturkarten breiten Einsatz. Über ISO 14443 und NFC können kontaktlos Verbindungen zu PCs, insbesondere Heimanwendungen, Terminals, zum Beispiel Stationen/ Arbeitsplätze in der Versicherungsanstalt, Mobiltelefonen oder Verifikationsgeräten aufgebaut werden, bzw. das Dokument mit Energie versorgt werden. Darüber hinaus kann das Dokument über das Display auch optisch ausgelesen werden, insbesondere in der oben beschriebenen Ausführungsform mit Barcode. Auf diese Weise kann auch die Kompatibilität zu derzeitig existenten Lösungen sichergestellt werden.

Durch die Verwendung von Plastikkarten entsteht im Vergleich zu papierbasierten Sicherheitsdokumenten wie dem heutigen deutschen Sozialversicherungsausweis ein weiterer Mehrwert durch die höhere Beständigkeit des neuen Dokuments, z.B. im regelmäßigen Gebrauch oder bei unerwünschten, zerstörerisch wirkenden Einflüssen wie Regen. Dadurch ist der Gebrauch des Dokumentes erleichtert, und der Bequemlichkeitsnutzen für den Anwender steigt, insbesondere bei einer Mitführpflicht für bestimmte Berufe, die oftmals im Freien tätig sind. Das Dokument ist besonders handlich und praktisch durch Nutzung der in ICAO 9303 empfohlenen Formate ID1, ID2 und ID3, ist jedoch nicht zwangsläufig auf diese Dokumentenformate festgelegt. Insbesondere im Vergleich zum heutigen deutschen Sozialversicherungsausweis, der deutlich größer ist, entsteht dadurch ein zusätzlicher Bequemlichkeitsnutzen für den Anwender.

In einer Ausführung kann die Identität der Arbeitnehmer zusätzlich durch Lesen des Personalausweises oder eines ähnlichen Identifikationsdokument geprüft werden, sodass auch das Vorspiegeln falscher Identitäten sofort aufgedeckt wird. Insbesondere in Verbindung mit einer biometrischen Verifikation ist kein Identitätsmissbrauch mehr möglich. Dabei wird der Fingerabdruck oder ein anderes biometrisches Merkmal des Arbeitnehmers mit Hilfe des in das mobile Kontrollgerät integrierten Sensoren aufgenommen und mit dem auf dem elektronischen Identitätsdokument gespeicherten Merkmal verglichen.

In einer Ausführungsform ist das biometrische Merkmal direkt auf dem in der Erfindung beschriebenen Sicherheitsdokument gespeichert. In diesem Fall ist die Prüfung eines Identitätsdokuments wie des Personalausweises nicht notwendig, da mit Hilfe des mobilen Kontrollgerätes die biometrischen Daten des Versicherungsnehmers direkt mit den auf dem erfindungsgemäßen Sicherheitsdokument gespeicherten verglichen werden können.

### Bezugszeichenliste

- 100: Dokument
- 102: Schnittstelle
- 104: Anzeige
- 104.1: Anzeigebereich
- 104.2: Anzeigebereich
- 106: Schaltung
- 108: Prozessor
- 110: Programm
- 112: Programmmodul
- 114: Treiber
- 116: Speicher
- 118: Daten
- 120: Signatur
- 122: Schnittstelle
- 124: Sender-Gerät
- 126: Schnittstelle
- 128: Empfänger-Gerät
- 130: Netzwerk-Schnittstelle
- 132: Netzwerk
- 134: Server-Computer
- 136: Nutzer-Schnittstelle
- 138: Netzwerk-Schnittstelle
- 140: Programmmodul
- 142: Programmmodul
- 144: Daten
- 146: Programm
- 148: Programmmodul
- 150: Nutzer-Schnittstelle
- 152: Netzwerk-Schnittselle
- 154: Programmmodul
- 156: Programmmodul
- 158: Referenzdaten
- 160: Programmmodul
- 162: Sensor
- 164: Gesichtsbild
- 166: Aufdruck
- 168: Gerät
- 170: Netzwerk-Schnittstelle
- 172: Nutzer-Schnittstelle
- 174: Browser-Programm
- 176: Authentifizierungsmodul
- 178: Nachricht
- 180: Bedienelement
- 182: Scrollbalken

## Patentansprüche

1. Dokument mit einer Schnittstelle (102) zum Empfang von Daten (118) und einer Signatur (120) der Daten von einem Sender-Gerät (124), mit Mitteln (110) zur Verifikation der Signatur, wobei die Mittel zur Verifikation der Signatur dazu ausgebildet sind, anhand einer Zertifikatskettenprüfung zu prüfen, ob die Signatur valide ist und dazu ausgebildet sind zu prüfen, ob eine Institution, von der die Daten signiert worden sind, zu Schreiben der Daten in das Dokument autorisiert ist, mit einem Speicher, mit Mitteln (108, 114) zur Speicherung der Daten und der Signatur in dem Speicher, wobei die Mittel zur Speicherung dazu ausgebildet sind, dass die Speicherung nur dann erfolgt, wenn die Signatur gültig ist, und wobei die Schnittstelle zum Senden der in dem Speicher gespeicherten Daten und der Signatur ausgebildet ist, mit einer Anzeige (104) und mit Mitteln (108, 114) zur Ansteuerung der Anzeige zur Ausgabe zumindest eines Teils der Daten, wobei die Anzeige und die Mittel zur Ansteuerung der Ausgabe dazu ausgebildet sind, dass die Ausgabe nur dann erfolgt, wenn die Signatur gültig ist, mit Mitteln zum Einkoppeln von Energie zur Energieversorgung der Mitteln (110) zur Verifikation der Signatur, der Mittel (108, 114) zur Speicherung der Daten und der Signatur und/oder der Mittel zur Ansteuerung der Anzeige, wobei der Speicher nicht-volatil und die Anzeige bistabil ist.

2. Dokument nach einem der vorhergehenden Ansprüche, wobei es sich bei den Daten um Bewegungsdaten handelt, und wobei in dem Speicher (116) zusätzlich Stammdaten gespeichert sind, und mit einem Aufdruck (166), der zumindest einen Teil der Stammdaten trägt.

3. Dokument nach einem der vorhergehenden Ansprüche, wobei die Ausgabe der Daten über die Anzeige in einer kognitiv erfassbaren Form und/oder in maschinenlesbarer Form erfolgt.

4. Dokument nach einem der vorhergehenden Ansprüche, mit Mitteln zur Authentifizierung (154) eines Empfänger-Geräts (128) gegenüber dem Dokument, wobei die erfolgreiche Authentifizierung des Empfänger-Geräts gegenüber dem Dokument Voraussetzung für das Senden der Daten und der Signatur an das Empfänger-Gerät ist.

5. Dokument nach einem der vorhergehenden Ansprüche, mit Mitteln zur Authentifizierung (154) des Dokuments gegenüber einem Empfänger-Gerät (128), welches zum Empfang der Daten und der Signatur dient.

6. Dokument nach einem der vorhergehenden Ansprüche, mit Mitteln (158) zur Authentifizierung eines Trägers des Dokuments.

7. Dokument nach Anspruch 6, mit einem Speicher (158) zur Speicherung von biometrischen Referenzdaten (158) zur Authentifizierung des Trägers gegenüber dem Dokument.

8. Datenverarbeitungsverfahren zur Verarbeitung von Daten durch ein Dokument nach einem der vorhergehenden Ansprüche , mit folgenden Schritten:
- Empfang von Daten (118) und einer Signatur (120) der Daten über eine Schnittstelle (102) des Dokuments von einem Sender-Gerät (124);
- Prüfung der Gültigkeit der Signatur anhand einer Zertifikatskettenprüfung, wobei die Prüfung umfasst: eine Prüfung, ob die Signatur valide ist und eine Prüfung, ob eine Institution, von der die Daten signiert worden sind, zu Schreiben der Daten in das Dokument autorisiert ist,
- falls die Signatur gültig ist: Speicherung der Daten und der Signatur in einem Speicher (116) des Dokuments und Anzeige (104) zumindest eines Teils der Daten in einer Anzeige des Dokuments.

9. Datenverarbeitungsverfahren nach Anspruch 8, mit folgenden weiteren Schritten:
- Authentifizierung eines Empfänger-Geräts (128) gegenüber dem Dokument,
- Senden der Daten an das Empfänger-Gerät über die Schnittstelle des Dokuments, nur wenn die Authentifizierung des Empfänger-Geräts gegenüber dem Dokument erfolgreich war.

10. Datenverarbeitungsverfahren nach Anspruch 9, wobei das Dokument einen elektronischen Speicher (116) zur Speicherung von biometrischen Referenzdaten (158) eines Trägers des Dokuments hat, und wobei die biometrischen Referenzdaten nur dann an das Empfänger-Gerät gesendet werden, falls die Authentifizierung des Empfänger-Geräts gegenüber dem Dokument erfolgreich war.

11. Datenverarbeitungsverfahren nach Anspruch 8, 9 oder 10, wobei die Daten Bewegungsdaten beinhalten, mit folgenden weiteren Schritten:
- Empfang von aktualisierten Bewegungsdaten und einer Signatur der aktualisierten Bewegungsdaten,
- Prüfung der Signatur der aktualisierten Bewegungsdaten,
- falls die Signatur der aktualisierten Bewegungsdaten gültig ist: Speicherung der aktualisierten Bewegungsdaten in dem Speicher des Dokuments.

12. Datenverarbeitungsverfahren nach Anspruch 11, wobei falls die Signatur gültig ist zumindest ein Teil der Bewegungsdaten auf der Anzeige des Dokuments angezeigt wird, und falls die Signatur der aktualisierten Bewegungsdaten gültig ist zumindest ein Teil der aktualisierten Bewegungsdaten auf der Anzeige angezeigt wird.

## Claims

1. A document with an interface (102) for receiving data (118) and a signature (120) for the data from a transmitter device (124), with means (110) for verifying the signature, wherein the means for verifying the signature are designed to check, on the basis of a certificate chain check, whether the signature is valid and are designed to check whether an institution by which the data have been signed is authorised to write the data into the document, with a memory, with means (108, 114) for storing the data and the signature in the memory, wherein the storage means are designed such that the data and signature are stored only when the signature is valid, and wherein the interface is designed to transmit the data and the signature stored in the memory, with a display (104), and with means (108, 114) for actuating the display to output at least some of the data, wherein the display and the means for actuating the output are designed such that the data are output only when the signature is valid, with means for coupling in power in order to supply power to the means (110) for verifying the signature, the means (108, 114) for storing the data and signature and/or the means for actuating the display, wherein the memory is non-volatile and the display is bistable.

2. The document according to the preceding claim, wherein the data are motion data, and wherein master data are additionally stored in the memory (116), and with a print (166), which carries at least some of the master data.

3. The document according to either one of the preceding claims, wherein the data are output via the display in a cognitively perceptible form and/or in machine-readable form.

4. The document according to any one of the preceding claims, with means for authenticating (154) a receiver device (128) to the document, wherein the successful authentication of the receiver device to the document is a precondition for transmitting the data and the signature to the receiver device.

5. The document according to any one of the preceding claims, with means for authenticating (154) the document to a receiver device (128), which is used to receive the data and the signature.

6. The document according to any one of the preceding claims, with means (158) for authenticating a carrier of the document.

7. The document according to claim 6, with a memory (158) for storing biometric reference data (158) for authenticating the carrier to the document.

8. A data processing method for processing data by a document according to any one of the preceding claims, said method having the following steps:
- receiving data (118) and a signature (120) of the data via an interface (102) of the document from a transmitter device (124);
- checking the validity of the signature on the basis of a certificate chain check, wherein the check comprises:
checking whether the signature is valid and checking whether an institution by which the data have been signed is authorised to write the data into the document,
- if the signature is valid: storing the data and the signature in a memory (116) of the document and displaying (104) at least some of the data in a display of the document.

9. The data processing method according to claim 8, with the following further steps:
- authenticating a receiver device (128) to the document,
- transmitting the data to the receiver device via the interface of the document, only when the authentication of the receiver device to the document has been successful.

10. The data processing method according to claim 9, wherein the document has an electronic memory (116) for storing biometric reference data (158) of a carrier of the document, and wherein the biometric reference data are only transmitted to the receiver device if the authentication of the receiver device to the document has been successful.

11. The data processing method according to claim 8, 9 or 10, wherein the data include motion data, said method having the following further steps:
- receiving updated motion data and a signature of the updated motion data,
- checking the signature of the updated motion data,
- if the signature of the updated motion data is valid: storing the updated motion data in a memory of the document.

12. The data processing method according to claim 11, wherein, if the signature is valid, at least some of the motion data is displayed on the display of the document, and, if the signature of the updated motion data is valid, at least some the updated motion data is displayed on the display.

## Revendications

1. Document doté d'une interface (102) pour la réception de données (118) et la signature (120) de données provenant d'un appareil émetteur (124), doté de moyens (110) pour la vérification de la signature, où les moyens pour la vérification de la signature sont conçus pour vérifier, à l'aide d'un test en chaîne de certificat, si la signature est valide et est conçue pour vérifier si une institution, par laquelle les données ont été signées, est autorisée pour l'écriture des données dans le document, doté d'une mémoire, doté de moyens (108, 114) pour le stockage des données et de la signature dans la mémoire, où les moyens pour le stockage sont conçus pour que le stockage n'ait lieu que si la signature est valable, et où l'interface est conçue pour l'envoi des données stockées dans la mémoire et de la signature, doté d'un affichage (104) et de moyens (108, 114) pour le démarrage de l'affichage pour l'édition d'au moins une partie des données, où l'affichage et les moyens pour le démarrage de l'édition sont conçus pour que l'édition n'ait lieu que si la signature est valable, doté de moyens pour le couplage d'énergie pour l'alimentation en énergie des moyens (110) pour la vérification de la signature, des moyens (108, 114) pour le stockage des données et de la signature, et/ou les moyens pour le démarrage de l'affichage, où la mémoire est non volatile et l'affichage est bistable.

2. Document selon l'une des revendications précédentes, dans lequel, dans le cas des données, il s'agit de données de déplacement, et où des données de base complémentaires sont stockées dans la mémoire (116), et porte l'au moins une partie des données de base avec une impression (166).

3. Document selon l'une des revendications précédentes, dans lequel l'édition des données a lieu par le biais de l'affichage dans une forme comprise de manière cognitive et/ou dans une forme lisible par machine.

4. Document selon l'une des revendications précédentes doté de moyens pour l'authentification (154) d'un appareil récepteur (128) vis-à-vis du document, où l'authentification réussie de l'appareil récepteur vis-à-vis du document est une condition nécessaire pour l'envoi des données et de la signature vers l'appareil récepteur.

5. Document selon l'une des revendications précédentes doté de moyens pour l'authentification (154) du document vis à vis d'un appareil récepteur (128), lequel sert à la réception des données et de la signature.

6. Document selon l'une des revendications précédentes doté de moyens (158) pour l'authentification d'un porteur du document.

7. Document selon la revendication 6 doté d'une mémoire (158) pour le stockage de données de référence biométriques (158) pour l'authentification du porteur vis-à-vis du document.

8. Procédé de traitement de données pour le traitement de données par un document selon l'une des revendications précédentes, avec les étapes suivantes :
- de réception de données (118) et d'une signature (120) des données par le biais d'une interface (102) du document à partir d'un appareil émetteur (124),
- de vérification de la validité de la signature à l'aide d'un test en chaîne de certificat, où la vérification comprend : une vérification si la signature est valide et une vérification si une institution, par laquelle les données ont été signées, est autorisée à écrire les données dans le document,
- dans le cas d'une signature valide : de stockage des données et de la signature dans une mémoire (116) du document et l'affichage (104) d'au moins une partie des données dans un affichage du document.

9. Procédé de traitement de données selon la revendication 8, avec les autres étapes suivantes :
- d'authentification d'un appareil récepteur (128) vis-à-vis du document,
- d'envoi des données à l'appareil récepteur par le biais de l'interface du document uniquement si l'authentification de l'appareil récepteur vis-à-vis du document a été couronnée de succès.

10. Procédé de traitement de données selon la revendication 9, dans lequel le document a une mémoire électronique (116) pour le stockage de données de référence biométriques (158) d'un porteur du document, et où les données de référence biométriques sont envoyées à l'appareil récepteur uniquement si l'authentification de l'appareil récepteur vis-à-vis du document a été couronnée de succès.

11. Procédé de traitement de données selon la revendication 8, 9 ou 10, dans lequel les données contiennent des données de mouvement avec les autres étapes suivantes :
- de réception de données de mouvement actualisées et d'une signature des données de mouvement actualisées,
- de vérification de la signature des données de mouvement actualisées,
- dans le cas où la signature des données de mouvement actualisée est valide : de stockage des données de mouvement actualisées dans la mémoire du document.

12. Procédé de traitement de données selon la revendication 11, dans lequel, dans le cas où la signature est valable, au moins une partie des données de mouvement est affichée sur l'affichage du document, et dans le cas où la signature des données de déplacement actualisées est valable, au moins une partie des données de déplacement actualisées est montrée sur l'affichage.
